# EUROPEAN PATENT SPECIFICATION

(11) **EP 2 949 554 B1**
(45) Date of publication and mention of the grant of the patent: **18.05.2016**
(21) Application number: 14195509.6
(22) Date of filing: 28.11.2014
(51) Int. Cl.: B62J 6/00, B62J 29/00

(54) **Mirror device including turn indicator lamp and motor vehicle including mirror device**
Spiegelvorrichtung mit Blinkerlampe und Kraftfahrzeug mit Spiegelvorrichtung
Dispositif de miroir comprenant une lampe d'indicateur de virage et véhicule automobile comprenant un tel dispositif

(30) Priority: 30.05.2014 JP 2014112938
(43) Date of publication of application: 02.12.2015
(73) Proprietor: Yamaha Hatsudoki Kabushiki Kaisha, Iwata-shi, Shizuoka-ken 438 (JP)
(72) Inventor: Tachibana, Masumi, Shizuoka-ken, 438-8501 (JP)
(74) Representative: Moreland, David

(56) References cited:
- EP-A1- 1 897 792
- CN-Y- 2 574 974
- JP-A- 2006 069 299
- JP-A- 2010 036 624
- JP-A- 2011 140 282
- JP-A- 2011 255 724
- TW-U- M 258 914

## Description

### FIELD OF INVENTION

The present invention relates to a mirror device including a turn indicator lamp and a saddle-ride or straddle-type vehicle, such as a saddle-straddling type motor vehicle, including the mirror device.

### BACKGROUND TO INVENTION

A configuration in which a turn indicator lamp and a mirror are integrally provided is known as a rear-view mirror device provided on a saddle-ride or straddle-type vehicle, such as a saddle-straddling type motor vehicle. For example, a rear-view mirror with an integral indicator or winker attached to a cowl of a motorcycle via an attachment plate is described in JP 5004012 B. The rear-view mirror with an integral indicator or winker includes a front housing, a rear housing, an indicator or winker device and a mirror.

The front housing has a configuration in which an indicator or winker storage and a cover are integrally formed. The rear housing has a configuration in which a mirror storage and an attachment stay are integrally formed. The indicator or winker device is stored in the front housing, and the mirror is stored in the rear housing.

A plurality of engaging holes and a plurality of engaging claws that can be engaged with one another are formed at each of the front housing and the rear housing. The plurality of engaging holes and the plurality of engaging claws are engaged, so that the front housing and the rear housing are engaged and the housing of the integral rear-view mirror is fabricated.

The indicator or winker device includes an indicator or winker bulb and a socket. Wiring is connected to the socket. The wiring connected to the socket of the indicator or winker device passes through a space between a cover of the front housing and the attachment stay of the rear housing, and leads to the attachment plate.

In the above-mentioned rear-view mirror with an integral indicator or winker described in JP 5004012 B, the front housing and the rear housing are joined by the engagement between the plurality of engaging holes and the plurality of engaging claws, respectively, in order to reduce the number of fastening members such as a bolt and a nut.

However, the engagement between the plurality of holes and the plurality of claws may result in the front housing and the rear housing not being firmly joined. Therefore, it is difficult to ensure rigidity of the housing. The indicator or winker device and the mirror are supported by the cover and the attachment stay. Thus, particularly high rigidity is required for a supporter that is constituted by the cover and the attachment stay.

Further, rain water or mud water is likely to enter the inside of the housing from a gap at a boundary between the front housing and the rear housing. The wiring is provided in the space between the cover of the front housing and the attachment stay of the rear housing. Therefore, high waterproofness is required at the supporter that is constituted by the cover and the attachment stay.

JP2006-069 299 describes a rear view mirror of a motorcycle, wherein the rear view mirror comprises a mirror case with a built-in turn-signal lamp and a support column for supporting the mirror case. The support column is formed in hollow shape so that a lead wire extending from the turn-signal lamp can be inserted therein. The mirror further comprises a base part for attaching the support column to the front cowling. While the base part is fastened and fixed to a pair of cowling attaching stay parts of the front cowling, a guide space for guiding the lead wire along an inner surface of the front cowling is formed on edge parts of the cowling attaching stay parts. The base end portions of the support columns are pivotally connected to the base part through a hollow bolt and a nut so as to act as a rotating shaft via a spring. The lead wire that is located in hollow sections of the supporting post passes the base part through a through-hole of the hollow bolt, which forms a passage, and an opening for the lead wire. Once past the base part, the lead wire is led inside the front cowling from a through hole formed in the front cowling through a through hole of a gasket interposed between the base part and the surface of the front cowling.

An object of the present invention is to provide a mirror device including a turn indicator lamp and a saddle-ride or straddle-type vehicle, such as a saddle-straddling type motor vehicle, including the mirror device that can prevent or inhibit an increase in number of components but achieve high rigidity and high waterproofness.

### SUMMARY OF INVENTION

Various aspects of the present invention are defined in the appended independent claims. Some preferred features are defined in the appended dependent claims.

According to a first aspect of the present invention is a mirror device for attaching to a vehicle main body, the vehicle main body including a head pipe and a front cowl provided in front of the head pipe. The mirror device may include a turn indicator lamp having wiring, a rear-view mirror, a holding member that integrally holds the turn indicator lamp and the mirror, a support member having a first end coupled to the holding member, and a second end and a holding mechanism for rotatably holding the second end of the support member at the vehicle main body. The support member may be integrally formed to have an inner passage that extends from the first end to the second end.

The holding mechanism may include a mounting member, such as a rivet member, that has a third end, a fourth end, a through passage extending from the third end to the fourth end, and a flange at the third end. The holding mechanism may include a first fixing member that has a first hole into which the mounting member is inserted or insertable. The holding mechanism may include a second fixing member that has a second hole into which the mounting member is inserted or insertable. The second fixing member may be fixable to the front cowl.

The flange of the mounting member may be arranged between the second end of the support member and the first fixing member such that the inner passage of the support member and the through passage of the mounting member communicate with each other. The first fixing member may extend, or be assembled, into the second end of the support member. The flange of the mounting member may be located between the second end of the support member and the first fixing member. The fourth end of the mounting member may be crimped or otherwise arranged such that the first fixing member and the second fixing member are rotatable relative to each other about an axis of the mounting member. The second fixing member may be located between the first fixing member and the fourth end of the mounting member. The wiring of the turn indicator lamp may extend or be led to the fourth end of the mounting member through an inside of the inner passage and an inside of the through passage of the mounting member from the first end of the support member.

In the mirror device, the first end of the support member may be coupled to the holding member that holds the turn indicator lamp and the mirror, and the second end of the support member may be rotatably held at the vehicle main body by the holding mechanism. Thus, the turn indicator lamp and the mirror may be supported to be rotatable with respect to the vehicle main body by the support member.

Since the support member may be integrally formed to have the inner passage that extends from the first end to the second end, high rigidity for supporting the turn indicator lamp and the mirror at the support member may be achieved. Further, because the support member may be formed of a single member, an increase in number of components may be inhibited or prevented. Further, because the support member may not have boundaries due to the joining with the plurality of members, rain water or mud water may be prevented from entering the inside of the inner passage through which the wiring passes. Therefore, waterproofness of the support member may be ensured.

In the holding mechanism, the flange of the mounting member may be located between the second end of the support member and the first fixing member, the first fixing member may extend or be assembled into the second end of the support member. Further, the fourth end of the mounting member may be crimped or otherwise arranged with the second fixing member being located between the first fixing member and the fourth end of the mounting member.

Thus, it may be possible to rotatably assemble the second fixing member into the second end of the support member without forming an attachment hole for a fastening member such as a bolt at the support member. Therefore, because a cap for closing the attachment hole may not be necessary, an increase in number of components may be inhibited or prevented. Further, a contour of the attachment hole and the cap may not appear on the outer surface of the support member. Therefore, design of the support member may be good. Further, it may be easy to assemble.

Further, because the wiring of the turn indicator lamp may extend or be led to the vehicle main body through the through hole of the mounting member from the second end of the support member, the wiring may not be pulled when the support member is rotated. Therefore, the wiring may be prevented from being damaged.

Further, the wiring of the turn indicator lamp may extend or be led to the vehicle main body through the through hole of the mounting member from the second end of the support member. In this way, the wiring may be prevented from being exposed between the second end and the vehicle main body. Therefore, design of appearance of the vehicle in the vicinity of the second end may be good.

The support member may be formed of metal, and the holding member may be formed of resin.

The support member may be formed of metal, so that high rigidity for supporting the turn indicator lamp and the mirror at the support member may be achieved. Further, the holding member may be formed of resin, so that an increase in weight of the member supported by the support member may be prevented or inhibited. As a result, a state of the turn indicator lamp and the mirror being supported by the support member may be stabilized.

The turn indicator lamp may include a printed circuit board, a light source, which may be mounted on or coupled to the printed circuit board, and a cover member provided to cover the printed circuit board and/or the light source. The cover member may have a lens portion that applies predetermined light distribution characteristics to light generated by the light source. A light shield, such as a light shielding film, may be formed on a portion of the cover member other than the lens portion.

In this case, predetermined light distribution characteristics may be applied to the light generated by the light source by the lens portion of the cover member. Thus, the light generated by the light source may be emitted in a desired direction. Further, because the light shield may be formed on a portion of the cover member other than the lens portion, the printed circuit board may not be viewed through the cover member. Thus, design of the turn indicator lamp may be good.

The light shielding film may be formed of paint.

In this case, because the light shielding film may be easily formed of paint, the design of the turn indicator may be good while an increase in cost may be inhibited.

One or more projections that extend towards the printed circuit board may be formed at a portion of the cover member opposite to the printed circuit board, and the printed circuit board may be supported on the cover member by being attached to the one or more projections.

In this case, it may not be necessary to provide a member for supporting the printed circuit board in a space on the opposite side of the printed circuit board to the cover member. Thus, the size of the turn indicator lamp in a direction that intersects with the printed circuit board and the cover member may be reduced.

Further, the distance between the light source and the lens portion may be maintained at an appropriate length by the projection. Therefore, desired light distribution characteristics may be applied to the light generated by the light source.

A screw hole may be formed at the tip end of at least one or more or each of the projections. A respective through hole corresponding to at least one or more or each of the projections of the cover member may be formed at the printed circuit board. A respective screw may be attached to the tip end of at least one or more or each of the projections of the cover member through the through hole of the printed circuit board, e.g. so as to support the printed circuit board on the cover member.

A screw head of the one or more or each screw for attaching the printed circuit board to the cover member may be not located in front of the printed circuit board,

An outer housing of the turn indicator lamp may have a front surface inclined rearward and downward. A front end upper portion of the holding member, which may form an indicator or flasher opening, may project to a position further forward than an upper end of the front surface of the outer housing.

According to a second aspect of the prevent invention is a saddle-ride or straddle-type vehicle, such as a saddle-straddling type motor vehicle, the vehicle comprising a vehicle main body, and the mirror device of the first aspect, wherein the mirror device is provided at or on, e.g. attached to, the vehicle main body.

The saddle-straddling type motor vehicle has the above-mentioned mirror device. Thus, the turn indicator lamp and the mirror may be stably supported by the support member with high rigidity. Further, because the number of components of the mirror device may be reduced, the assembly work of the saddle-straddling type motor vehicle may become easier, and the cost of the saddle-straddling type motor vehicle may be reduced. Further, because the waterproofness in the support member of the mirror device may be ensured, an occurrence of the damage to the electrical system may be prevented.

The vehicle main body may include an attachment member that supports the mirror device at a position further forward than the head pipe in a side view of the vehicle. The attachment member may include a fixing portion to which the second fixing member of the mirror device is fixed or fixable. The attachment member may include a guide that guides a portion of wiring drawn out from the fourth end of the mounting member with the second fixing member being fixed to the fixing portion. The guide may be formed to cover the drawn out portion of the wiring from behind.

In this case, the portion of the wiring drawn out from the fourth end of the mounting member may be covered by the guide of the attachment member from behind with the second fixing member of the mirror device being fixed to the fixing portion of the attachment member at a position further forward than the head pipe. Thus, partial deflection and bending of the wiring may be prevented. Further, because the wiring of the turn indicator lamp may not be visible from a position behind the head pipe, design of the front portion of the saddle-straddling type motor vehicle as viewed from the rider may be good.

The front cowl may have a hole and the second fixing member of the mirror device may be fixed to the vehicle main body through the hole. An elastic waterproof member may be arranged between the second fixing member and the front cowl, e.g. such that a space surrounding the hole of the front cowl may be closed by surrounding the portion of the wiring drawn out from the fourth end of the mounting member, e.g. with the elastic waterproof member. A gap between the second fixing member and the front cowl may be closed, e.g. by the elastic waterproof member.

In this case, the wiring of the turn indicator lamp may be prevented from being exposed in the gap between the second fixing member and the front cowl. Further, moisture of rain water or mud water may be prevented from entering the hole of the cover member through a gap between the second fixing member and the cover member.

A duct may be provided in front of the head pipe. An intake opening may be formed at the upper cowl. The intake opening may be located at the center of the vehicle in the width direction W. A tip end of the duct may be connected to an intake opening of the upper cowl from behind. During the travelling of the vehicle, air that flows into the duct through the intake opening may be led to an engine, e.g. through an intake passage, an air cleaner, an intake pipe and a throttle body.

According to a third aspect of the present invention is a method of assembling and/or mounting a mirror device for attaching to a vehicle main body, the vehicle main body including a head pipe and a front cowl provided in front of the head pipe. The mirror device may be or comprise the mirror device of the first aspect.

The method may comprise providing the mirror device with a turn indicator lamp having wiring, a rear-view mirror, a holding member that integrally holds the turn indicator lamp and the mirror, a support member having a first end coupled to the holding member and a second end, and a holding mechanism for rotatably holding the second end of the support member at the vehicle main body. The support member may be integrally formed to have an inner passage that extends from the first end to the second end.

The holding mechanism may include a mounting member, such as a rivet member, that has a third end, a fourth end, a through passage extending from the third end to the fourth end, and a flange at the third end. The holding mechanism may include a first fixing member that has a first hole. The method may comprise inserting the mounting member into the first hole. The holding mechanism may include a second fixing member that has a second hole. The method may comprise inserting the mounting member into the second hole. The second fixing member may be fixable to the front cowl. The method may comprise fixing the second fixing member to the front cowl.

The method may comprise arranging the flange of the mounting member between the second end of the support member and the first fixing member such that the inner passage of the support member and the through passage of the mounting member communicate with each other. The method may comprise assembling or extending the first fixing member into the second end of the support member. The method may comprise locating the flange of the mounting member between the second end of the support member and the first fixing member. The method may comprise crimping or otherwise arranging the fourth end of the mounting member such that the first fixing member and the second fixing member are rotatable relative to each other about an axis of the mounting member. The method may comprise locating the second fixing member between the first fixing member and the fourth end of the mounting member. The method may comprise extending or leading wiring of the turn indicator lamp to the fourth end of the mounting member through an inside of the inner passage and an inside of the through passage of the mounting member from the first end of the support member.

According to a fourth aspect of the present invention is a method of attaching a mirror device according to the first aspect to a vehicle main body of a saddle-ride or straddle-type vehicle, such as a saddle-straddling type motor vehicle, the vehicle main body comprising a head pipe and a front cowl provided in front of the head pipe, the method comprising: fixing the second fixing member of the mirror device to the front cowl.

Features described in relation to any of the above aspects may also be applicable to any of the other above aspects. Features described above and/or below individually and/or in combination in relation to any of the above aspects may be jointly or individually and/or separably applicable to any other of the above aspects. Apparatus features corresponding to those described above and/or below in relation to a method and also method features corresponding to the use, assembly and fabrication of any apparatus features described above and/or below are also intended as falling within the scope of the present invention.

### BRIEF DESCRIPTION OF DRAWINGS

An embodiment of the present invention will now be described, by way of example only, and with reference to the accompanying drawings, which are:
- **Figure 1**: a side view of one side of a motorcycle according to one embodiment of the present invention;
- **Figure 2**: a front view of the motorcycle of Figure 1 as viewed from the front;
- **Figure 3**: a perspective view showing assembly steps of a front portion of the motorcycle of Figure 1;
- **Figure 4**: a perspective view showing the assembly steps of the front portion of the motorcycle of Figure 1;
- **Figure 5**: a perspective view showing the assembly steps of the front portion of the motorcycle of Figure 1;
- **Figure 6**: a perspective view showing the assembly steps of the front portion of the motorcycle of Figure 1;
- **Figure 7**: a perspective view showing the assembly steps of the front portion of the motorcycle of Figure 1;
- **Figure 8**: a perspective view showing assembly steps of a mirror device of Figure 1;
- **Figure 9**: a longitudinal cross sectional view of a movable holding mechanism attached to an other end of a support member;
- **Figure 10**: a partially enlarged plan view of a left front portion of the motorcycle of Figure 1 as viewed from above;
- **Figure 11**: a view of a mirror of a left mirror device attached to a vehicle main body as viewed from behind;
- **Figure 12**: a cross sectional view taken along the line A-A of the mirror device of Figure 11;
- **Figure 13**: a cross sectional view taken along the line B-B of the mirror device of Figure 11;
- **Figure 14**: an external perspective view of a stay of Figure 3 as viewed obliquely rearward from a position further forward and upward than the motorcycle;
- **Figure 15**: a side view of part of the front portion of the motorcycle as viewed from a position further leftward than the motorcycle;
- **Figure 16**: a cross sectional view taken along the line C-C of Figure 15; and
- **Figure 17**: a back view of the part of the front portion of the motorcycle as viewed from behind.

### DETAILED DESCRPTION OF DRAWINGS

A mirror device including a turn indicator lamp and a saddle-ride or straddle type vehicle, such as a saddle-straddling type motor vehicle, including the mirror device will be described below with reference to drawings. In the following description, a motorcycle will be described as one example of the saddle-straddling type motor vehicle.

### (1) Schematic Configuration of Motorcycle

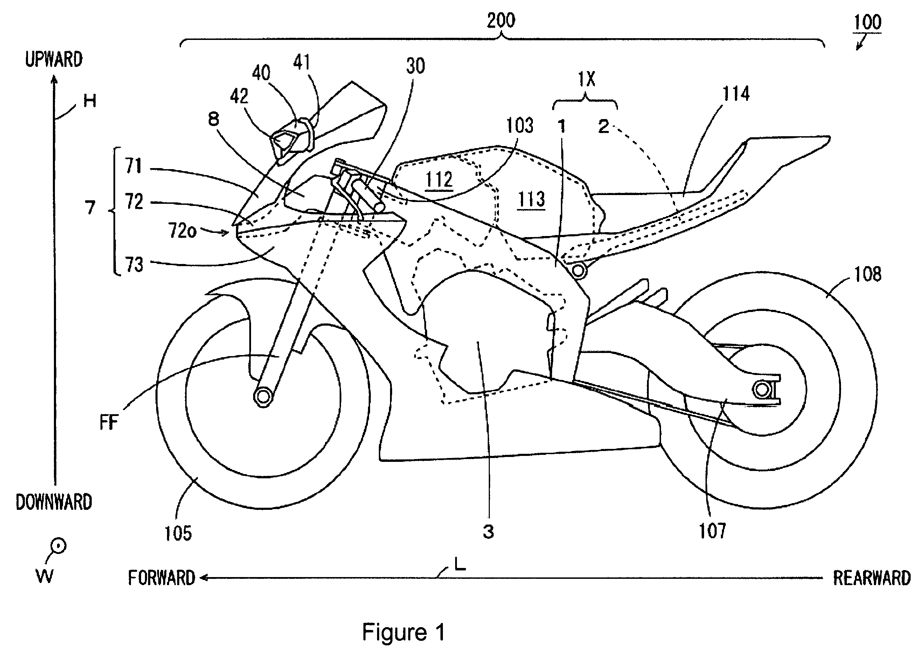

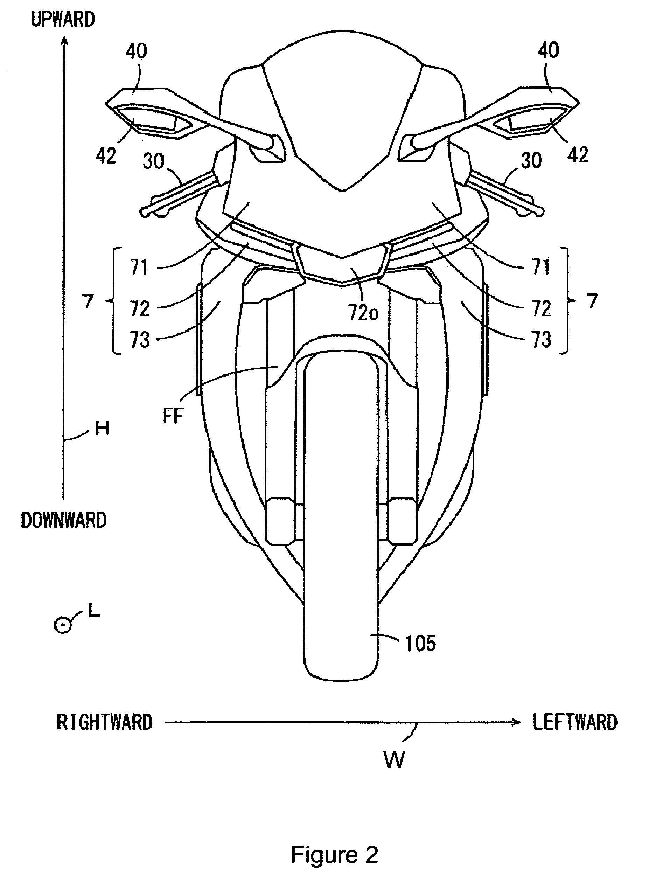

Figure 1 is a side view of one side of the motorcycle 100 according to one embodiment of the present invention, and Figure 2 is a front view of the motorcycle 100 of Figure 1 as viewed from the front. In Figures 1 and 2, the motorcycle 100 is shown standing up to be perpendicular to the road surface. In Figures 1, 2, and each of subsequent diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Figure 1, the motorcycle 100 includes a head pipe 103 and a body frame 1 X. The body frame 1 X includes a pair of main frames 1, namely right and left main frames 1, and a pair of sub-frames 2, namely right and left sub-frames 2. The main frames 1 extend obliquely downward and rearward from the head pipe 103. The rear ends of the main frames 1 are curved downward. The sub-frames 2 extend rearward from respective upper portions at the rear ends of the respective main frames 1.

A duct 8 is provided in front of the head pipe 103. A front fork FF is provided at the head pipe 103 to be swingable or rotatable rightward and leftward. Right and left handles 30 are provided at an upper end of the front fork FF. A front wheel 105 is rotatably supported at the lower end of the front fork FF.

An engine 3 is provided at a lower portion of the pair of main frames 1. The engine 3 is supported by the pair of main frames 1. An air cleaner 112 is supported by the pair of main frames 1 at a position above the engine 3. A discharge port of the air cleaner 112 is connected to an intake port of the engine 3 through an intake pipe and a throttle body (not shown).

A fuel tank 113 is supported behind the air cleaner 112 by the pair of main frames 1. Further, a seat 114 is supported behind the fuel tank 113 by the pair of sub-frames 2. A rear arm 107 is provided to extend rearward from the lower ends of the main frames 1. A rear wheel 108 is rotatably supported at the rear end of the rear arm 107.

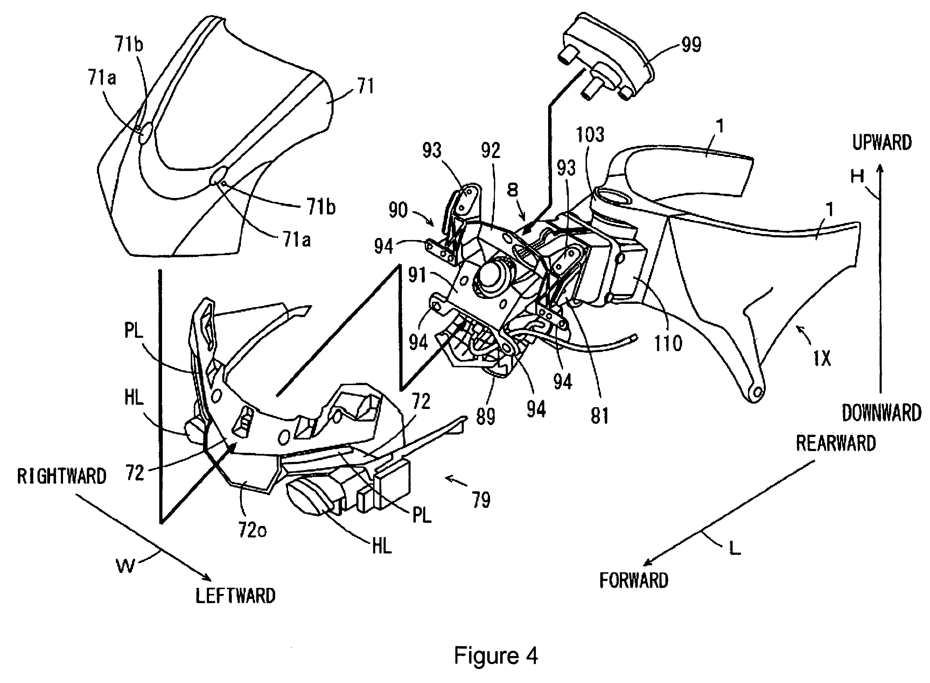

As shown in Figures 1 and 2, a body cover 7 is provided to cover the head pipe 103 from the front and part of the front fork FF from both sides. The body cover 7 includes a front cowl 71, an upper cowl 72, a pair of side cowls 73, namely right and left side cowls 73, and a head lamp cover 74 that is described below in relation to Figure 4.

As shown in Figure 1, the front cowl 71 extends obliquely upward and rearward from a position in front of the head pipe 103. The upper cowl 72 is located below the front cowl 71 and supports the lower end of the front cowl 71. The side cowls 73 are located at positions below the upper cowl 72 and further outward than the front fork FF.

An intake opening 720 is formed at the upper cowl 72. As shown in Figure 2, when the motorcycle 100 is viewed from the front, the intake opening 720 is located at the center of the motorcycle 100 in the width direction W.

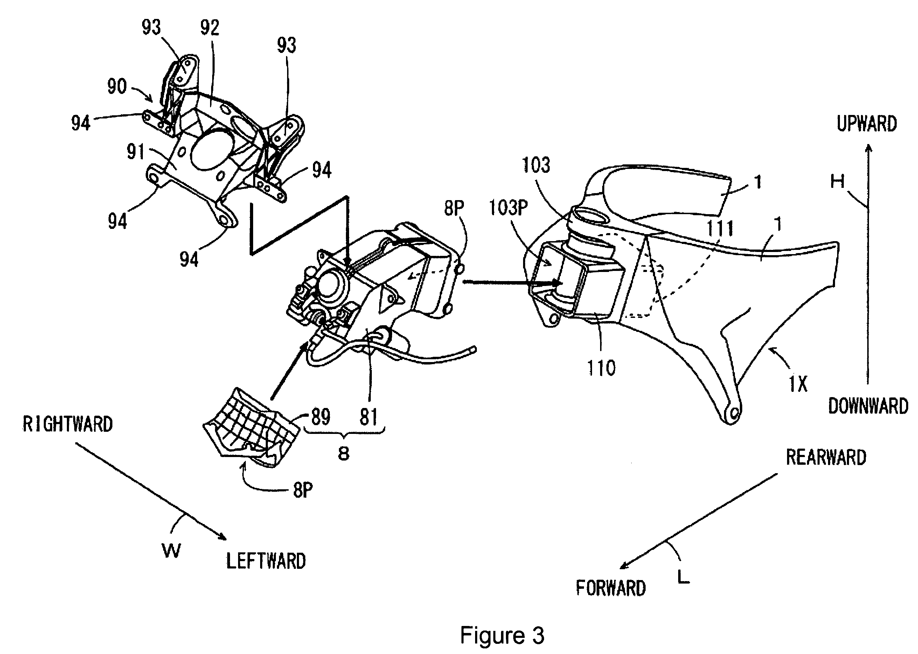

A tip end of the duct 8 of Figure 1 is connected to the intake opening 720 of the upper cowl 72 from behind. During the travelling of the motorcycle 100, the air that flows into the duct 8 through the intake opening 720 is led to the engine 3 through an intake passage 103P (Figure 3), described below, the air cleaner 112, the intake pipe and the throttle body (not shown). Thus, a supercharging effect is achieved, and high output power is generated.

As shown in Figures 1 and 2, right and left mirror devices 40 are provided on the front cowl 71 at positions having substantially the same height as the upper end of the front fork FF. Each mirror device 40 is one example of the mirror device including the turn indicator lamp, and includes a mirror 41 directed rearward of the vehicle and an indicator or flasher 42 directed forward of the vehicle.

A rider of the motorcycle 100 can view the area behind the motorcycle 100 by looking at each mirror 41 while driving. Further, the rider of the motorcycle 100 can switch between an unlit or non-operating state and a blinking or operating state of each indicator or flasher 42 by operating a handle switch provided at each of the pair of handles 30. Details of the mirror devices 40 will be described below. In the following description, in the motorcycle 100 shown in Figures 1 and 2, an assembly of the constituent elements except for the pair of mirrors 40 is referred to as a vehicle main body 200.

### (2) Configuration of Front Portion of Motorcycle

Figures 3 to 7 are perspective views showing assembly steps of the front portion of the motorcycle 100 of Figure 1. An attaching step of the front fork FF to the head pipe 103 will not be described below.

As shown in Figure 3, a square-tube intake guide 110 is attached to a front portion of the head pipe 103. The intake guide 110 is provided to open forward and rearward. Further, an intake guide 111 is attached to a rear portion of the head pipe 103 to communicate with the intake guide 110. An intake passage 103P that leads air rearward from the front of the head pipe 103 is formed by the intake guides 110, 111.

The duct 8 is connected to the intake guide 110, and an inlet port of the air cleaner 112 of Figure 1 is connected to the intake guide 111. Thus, the air that flows into the duct 8 is smoothly led to the air cleaner 112 through the intake passage 103P.

The duct 8 is constituted by a duct main body 81 and a duct tip end 89. The duct main body 81 is a cylindrical member having a rectangular cross section, which extends obliquely upward and forward, and further extends obliquely downward and forward. The duct tip end 89 is attached to the front end of the duct main body 81.

The duct tip end 89 is a cylindrical member having a rectangular cross section, and extends obliquely downward and forward. The length of the duct tip end 89 in the front-and-rear direction L is shorter than the length of the duct main body 81 in the front-and-rear direction L. The duct main body 81 is formed of a glass fiber-reinforced resin, for example, and the duct tip end 89 is formed of rubber, for example.

An inner space of the duct main body 81 and an inner space of the duct tip end 89 respectively function as an intake passage 8P for leading air to the engine 3.

As described above, the rear end of the duct main body 81 is connected to the intake guide 110. A stay 90 is attached to the duct main body 81. The stay 90 supports the mirror devices 40 and a meter unit 99 that is described below in relation to Figure 4. In this manner, the duct 8 and the stay 90 are integrally fixed to the body frame 1X.

The stay 90 is formed of a glass fiber-reinforced resin, for example. The stay 90 has a duct attachment portion 91, an upstanding portion 92, a pair of mirror device fixing portions 93 and a plurality of (four in the present example) lamp fixing portions 94.

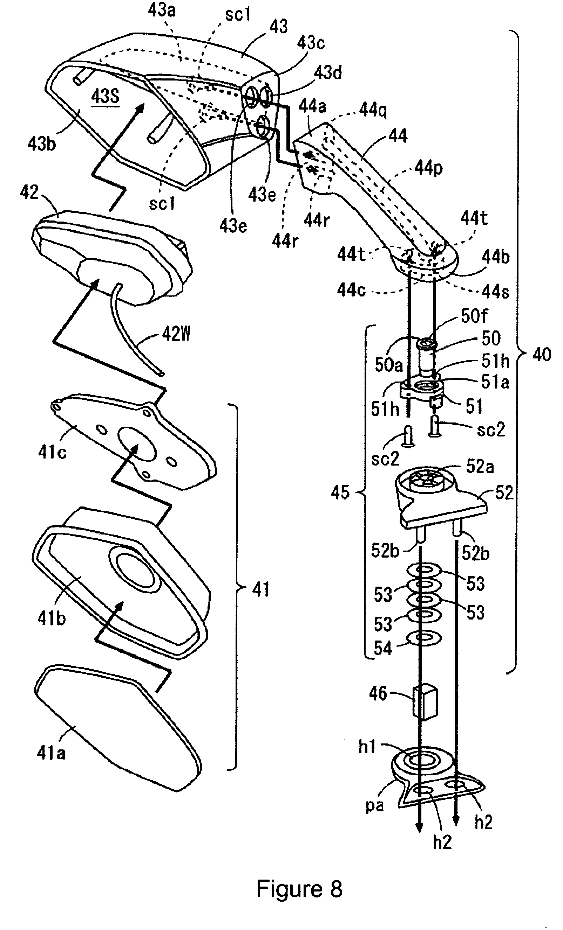

The stay 90 is attached to the duct 8 such that the duct attachment portion 91 is arranged on the upper surface of the duct attachment portion 81. The upstanding portion 92 projects upward from the rear end of the duct attachment portion 91. The mirror device fixing portions 93 are respectively located at the right and left of the upstanding portion 92. Two through holes through which two bolts 52b (Figure 8) respectively pass are formed at each mirror device fixing portion 93. Details of the stay 90 will be described below.

Two lamp fixing portions 94 are respectively located at the right and left of the front end of the duct attachment portion 91. The other two lamp fixing portions 94 are located below the pair of mirror device fixing portions 93, respectively.

As shown in Figure 4, a lamp unit 79 is attached to the plurality of lamp fixing portions 94 of the stay 90. The lamp unit 79 includes an upper cowl 72, a pair of position lamps PL and a pair of head lamps HL.

The lower end of the front cowl 71 of Figure 1 is attached to the front end of the upper cowl 72. A pair of mirror fixing holes 71a, namely right and left mirror fixing holes 71 a, and a pair of wiring holes 71 b, namely right and left wiring holes 71 b, are formed at the front cowl 71. The front cowl 71 is attached to the upper cowl 72, so that the mirror fixing holes 71 a overlap with the respective mirror device fixing portions 93 of the stay 90. Thus, the pair of mirror device fixing portions 93 is exposed on the upper surface of the front cowl 71.

The meter unit 99 is attached to the upstanding portion 92 of the stay 90 from behind. The meter unit 99 has a configuration in which a speed meter and a tachometer, for example, are stored in a casing.

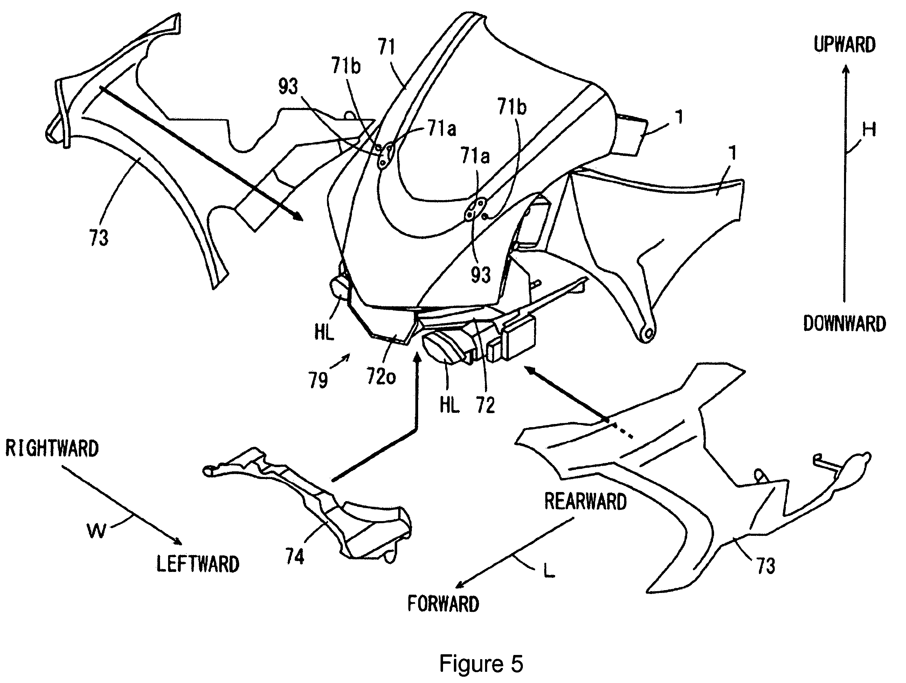

As shown in Figure 5, the side cowls 73 are attached to a right side portion and a left side portion of the upper cowl 72, respectively. Further, the head lamp cover 74 is attached to lower portions of a pair of head lamps HL to cover part of the lamp unit 79 from below.

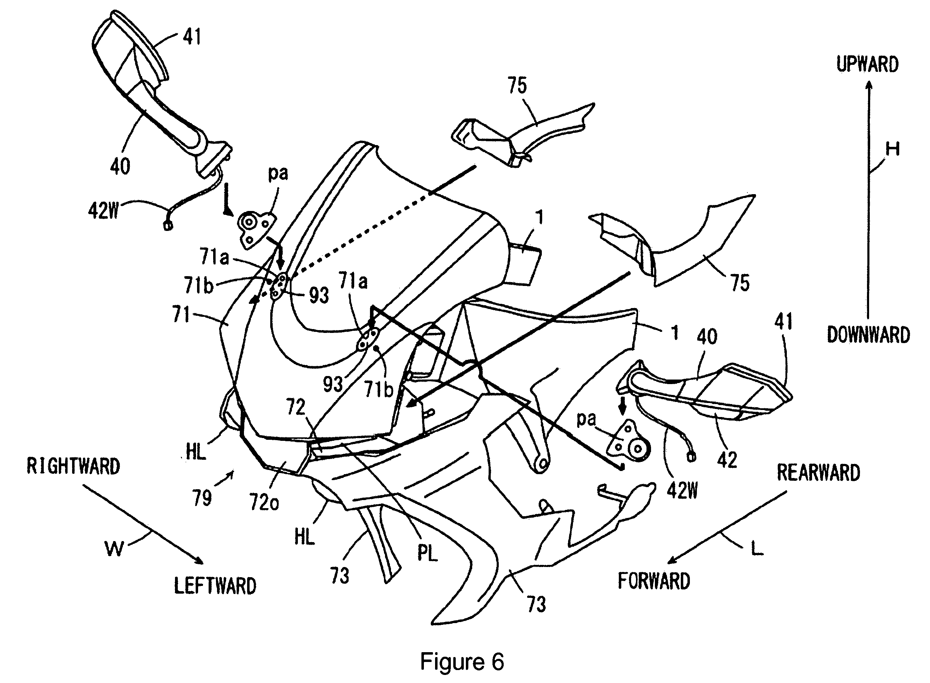

As shown in Figure 6, the mirror devices 40 are attached to respective mirror device fixing portions 93 that are exposed through the mirror fixing holes 71 a of the front cowl 71 with respective packing members pa made of rubber sandwiched therebetween. At this time, wiring 42W of each flasher 42 that extends from the lower end of each mirror device 40 is passed through each wiring hole 71 b of the front cowl 71.

Further, in the present example, a pair of inner covers 75 is provided, wherein the respective inner covers 75 are respectively attached to the right and left outer side portions of the upper cowl 72 in the width direction W to cover at least parts of the pair of position lamps PL from behind.

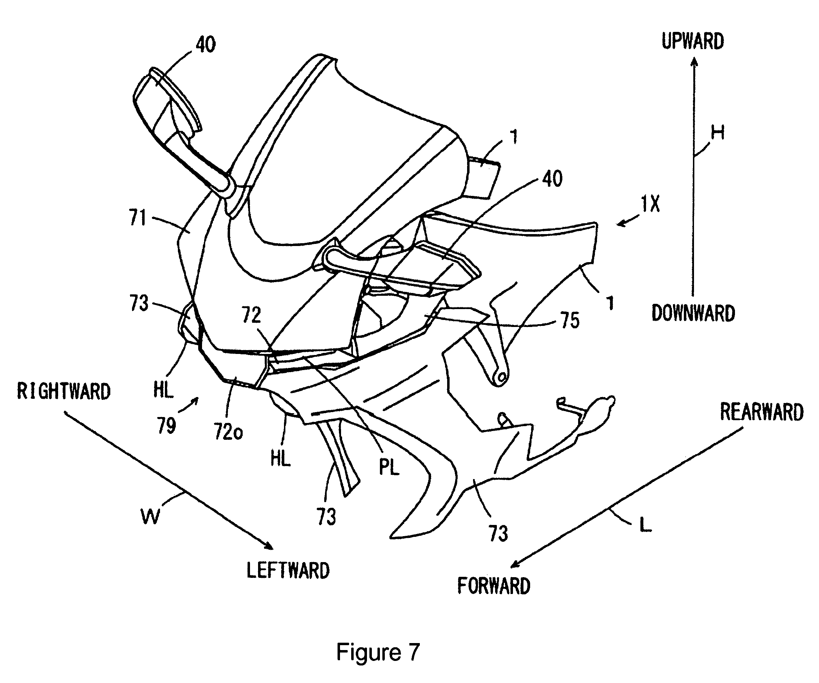

The front portion of the motorcycle 100 is assembled as described above. Thus, as shown in Figure 7, each constituent element that constitutes the front portion of the motorcycle 100 is fixed to the body frame 1X.

### (3) Details of Mirror Devices

Figure 8 is a perspective view showing assembly steps of the mirror device 40 of Figure 1. As shown in Figure 8, the mirror device 40 of the present example is mainly constituted by the mirror 41, the indicator or flasher 42, a holding member 43, a support member 44 and a movable holding mechanism 45.

The holding member 43 is a casing member, made of resin, for integrally holding the mirror 41 and the indicator or flasher 42, and has a storage space 43S that can store the mirror 41 and the indicator or flasher 42. The holding member 43 has a flasher opening 43a, a mirror opening 43b and a coupling portion 43c.

The storage space 43S and an outside space of the holding member 43 communicate with each other through the indicator or flasher opening 43a and the mirror opening 43b. Further, one wiring through hole 43d and two screw through holes 43e through which the storage space 43S and the outside space of the holding member 43 communicate with each other are formed at the coupling portion 43c.

The support member 44 is a metallic bar-shaped member and has an inner passage 44p. The inner passage 44p extends from one end 44a to the other end 44b of the support member 44. The support member 44 is fabricated by integral formation to have the inner passage 44p. Two screw holes 44r are formed at the one end 44a of the support member 44 together with one end opening 44q of the inner passage 44p. A recess 44c into which a pin fixing member 51, described below, is fitted is formed at the other end 44b of the support member 44. Two screw holes 44t are formed together with another end opening 44s of the inner passage 44p at the bottom surface of the recess 44c.

The coupling portion 43c of the holding member 43 and the one end 44a of the support member 44 are coupled. In this case, the holding member 43 is positioned at the support member 44 such that the wiring through hole 43d of the holding member 43 and the one end opening 44q of the support member 44 overlap with each other and the two screw through holes 43e of the holding member 43 and the two screw holes 44r of the support member 44 overlap with each other, respectively. In this state, screws sc1 are fitted into the two screw holes 44r of the support member 44 through the two screw through holes 43e from inside of the holding member 43, respectively. Thus, the holding member 43 and the support member 44 are coupled with each other with the storage space 43S and the inner passage 44p communicating with each other.

The movable holding mechanism 45 includes a rivet pin 50, the pin fixing member 51, a body fixing member 52, a plurality of (e.g. four in the present example) disc springs 53 and a washer 54. The rivet pin 50 is a metallic hollow pin and has a through passage 50a that extends from an upper end to a lower end of the rivet pin 50. A flange 50f is formed at the upper end of the rivet pin 50.

The pin fixing member 51 is formed of metal, has an upper surface and a lower surface, and has a pin insertion hole 51a that opens to the upper surface and the lower surface. The pin insertion hole 51a has an inner diameter that is slightly larger than the outer diameter of the rivet pin 50. Further, the pin fixing member 51 has two through holes 51 h that extend in the top-and-bottom direction.

The body fixing member 52 is formed of metal, has an upper surface and a lower surface, and has a pin insertion hole 52a that opens to the upper surface and the lower surface. The pin insertion hole 52a has the same inner diameter as the pin insertion hole 51 a of the pin fixing member 51. Head portions of the two bolts 52b are embedded in the body fixing member 52. The two bolts 52b project downward from the body fixing member 52.

The movable holding mechanism 45 is attached to the other end 44b of the support member 44. In this case, the rivet pin 50 is first inserted into the pin insertion hole 51 a of the pin fixing member 51 from above. In this state, the flange 50f at the upper end of the rivet pin 50 is supported by the upper surface of the pin fixing member 51.

Next, the pin fixing member 51 is fitted into the recess 44c of the other end 44b of the support member 44 such that the inner passage 44p of the support member 44 and the through passage 50a of the rivet pin 50 communicate with each other. At this time, the flange 50f of the rivet pin 50 is located between the pin fixing member 51 and the recess 44c of the other end 44b of the support member 44.

Next, screws sc2 are fitted into the two screw holes 44t formed at the bottom surface of the recess 44c through the two through holes 51 h of the pin fixing member 51, respectively. In this manner, the pin fixing member 51 is assembled into the other end 44b of the support member 44, and the rivet pin 50 extends to a position further downward than the pin fixing member 51.

Next, the rivet pin 50 fixed to the other end 44b of the support member 44 is inserted into the pin insertion hole 52a of the body fixing member 52. Further, the plurality of (four in the present example) disc springs 53 and a washer 54 are put around the rivet pin 50 from below the body fixing member 52.

Next, the lower end of the rivet pin 50 is crimped such that the pin fixing member 51 and the body fixing member 52 are rotatable with each other about an axis of the rivet pin 50. In this manner, the attaching of the movable holding mechanism 45 to the other end 44b of the support member 44 is completed.

The mirror 41 includes a mirror 41 a, a mirror holding member 41 b and a mirror fixing member 41 c. At the time of the attaching of the mirror 41 and the indicator or flasher 42 to the holding member 43, the mirror fixing member 41 c of the mirror 41 is first screwed to the indicator or flasher 42.

Next, with the indicator or flasher 42 and the mirror fixing member 41c being integrally coupled, the mirror fixing member 41c is screwed at the inside of the holding member 43. Thus, the indicator or flasher 42 is stored in the storage space 43S.

In this state, the wiring 42W of the indicator or flasher 42 is led to a position below the body fixing member 52 through the wiring through hole 43d of the coupling portion 43c, the inner passage 44p of the support member 44 and the through passage 50a of the rivet pin 50. A connector 46 is connected to a tip end of the wiring 42W that is led to a position below the body fixing member 52.

Next, the mirror holding member 41 b is attached to the mirror fixing member 41c in the storage space 43S to be swingable or rotatable. Further, the mirror 41 a is attached to the mirror holding member 41 b.

At the time of the attaching of the mirror device 40 to the vehicle main body 200 of Figure 1, the packing member pa is used. The packing member pa has one wiring through hole h1 and two bolt through holes h2. The wiring 42W that has been led to a position below the body fixing member 52 is passed through the wiring through hole h1 of the packing member pa. Further, the two bolts 52b that project downward from the body fixing member 52 are passed through the two bolt through holes h2 of the packing member pa, respectively.

Thereafter, the two bolts 52b of the mirror device 40 are inserted into the two through holes of the mirror device fixing portions 93 of Figure 6, respectively. In this state, two nuts are attached to the two bolts 52b, respectively.

In the present embodiment, the assembly procedure of the mirror device 40 is not limited to the above-mentioned example. For example, the mirror 41 and the indicator or flasher 42 may be stored in the holding member 43 after the holding member 43 and the support member 44 are first coupled. Thereafter, the movable holding mechanism 45 may be attached to the support member 44.

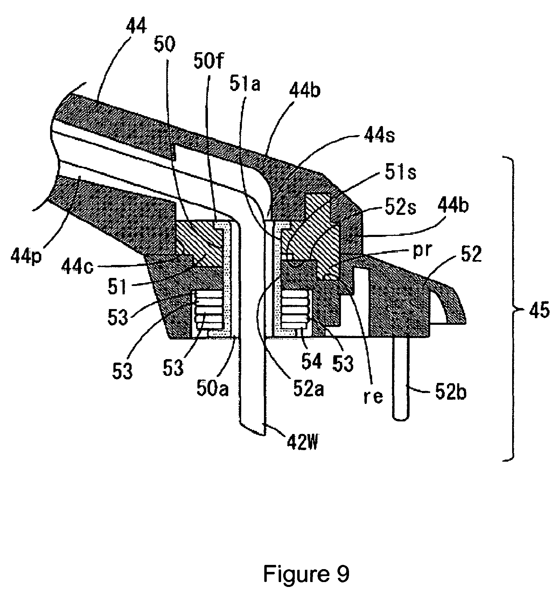

Figure 9 is a longitudinal cross sectional view of the movable holding mechanism 45 attached to the other end 44b of the support member 44. As shown in Figure 9, with the lower end of the rivet pin 50 being crimped, the pin fixing member 51, the body fixing member 52, the plurality of disc springs 53 and the washer 54 are present to surround the outer periphery of the rivet pin 50 between the upper end and the lower end of the rivet pin 50.

The pin fixing member 51 has an abutment surface 51s, and the body fixing member 52 has an abutment surface 52s. With the abutment surface 51s of the pin fixing member 51 and the abutment surface 52s of the body fixing member 52 being in contact with each other, the lower end of the rivet pin 50 is crimped. The pin fixing member 51 and the body fixing member 52 are rotatable relative to each other about the axis of the rivet pin 50.

One projection pr is formed at the abutment surface 51s of the pin fixing member 51. A plurality of recesses re into which the projection pr of the abutment surface 51 s can be fitted are formed at the abutment surface 52s of the body fixing member 52.

With the projection pr being fitted into one recess re in the movable holding mechanism 45, the support member 44 is fixed to the body fixing member 52 by elastic force of the plurality of disc springs 53. In this state, when the support member 44 is rotated about the axis of the rivet pin 50 with respect to the body fixing member 52, the projection pr is disengaged from the one recess re. When the support member 44 is further rotated with respect to the body fixing member 52, the projection pr is fitted into another recess re. Thus, the support member 44 is fixed to the body fixing member 52 again by the elastic force of the plurality of disc springs 53.

In this manner, in the movable holding mechanism 45, the support member 44 is rotated about the axis of the rivet pin 50, so that a rotation angle of the support member 44 with respect to the body fixing member 52 can be changed to a predetermined plurality of angles.

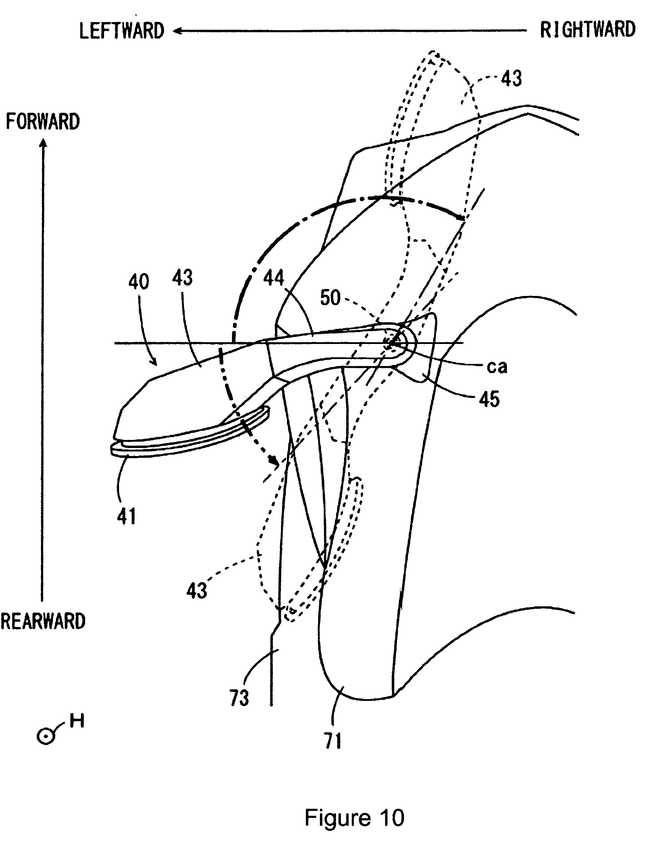

Figure 10 is a partially enlarged plan view of a left front portion of the motorcycle 100 of Figure 1 as viewed from above. The holding member 43 and the support member 44 of the left mirror device 40 are supported while being directed leftward from the movable holding mechanism 45.

In the mirror device 40 of the present example, when a large load is applied to the holding member 43 forward of the vehicle, clockwise rotation force is exerted on the pin fixing member 51 of Figure 9. Thus, the holding member 43 is rotated about the axis ca of the rivet pin 50, and directed to a position further forward than the movable holding member 45 as indicated by the thick one-dot dash arrow in Figure 10.

Further, when a large load is applied on the holding member 43 rearward of the vehicle, counterclockwise rotation force is exerted on the pin fixing member 51 of Figure 9. Thus, the holding member 43 is rotated with the axis ca of the rivet pin 50 being used as a center, and is directed to a position further rearward than the movable holding mechanism 45 as indicated by the thick two-dot dash arrow in Figure 10.

In this manner, in the mirror device 40 of the present example, when a large load is applied to the holding member 43 in the front-and-rear direction L, the holding member 43 is rotated with respect to the vehicle main body 200. Thus, the holding member 43 and the support member 44 are prevented from being damaged when the vehicle falls over. Further, the rider can fold the holding member 43 forward or rearward of the vehicle by rotating the holding member 43. Therefore, a necessary space for parking the motorcycle 100 is reduced.

### (4) Configuration of Indicators or Flashers

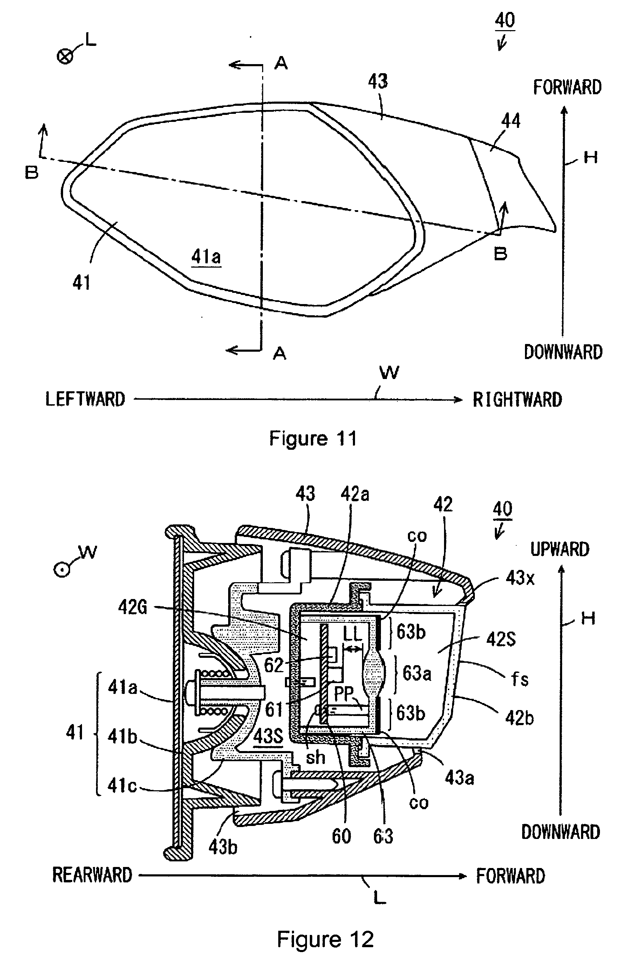

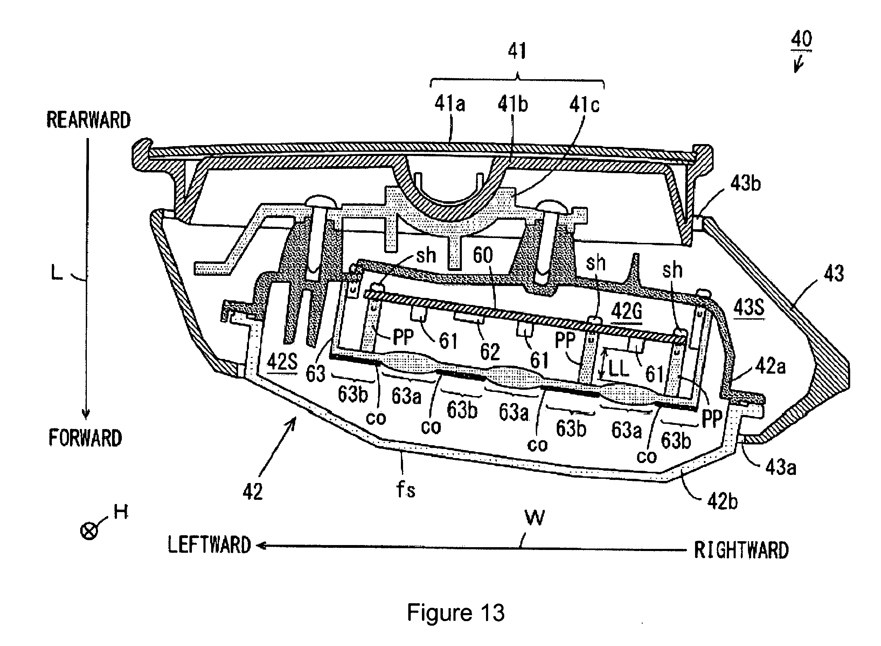

Figure 11 is an appearance view of the mirror 41 of the left mirror device 40 attached to the vehicle main body 200 as viewed from behind, Figure 12 is a cross sectional view taken along the line A-A of the mirror device 40 of Figure 11 and Figure 13 is a cross sectional view taken along the line B-B of the mirror device 40 of Figure 11.

The mirror device 40 of Figure 12 is attached to the vehicle main body 200 such that the indicator or flasher opening 43a of the holding member 43 is directed forward and the mirror opening 43b is directed rearward.

As shown in Figures 12 and 13, the flasher 42 includes an inner housing 42a, an outer housing 42b, a printed circuit board 60, a plurality of (three in the present example) light-emitting diodes 61, a driving circuit 62 and a lens cover member 63.

The inner housing 42a and the outer housing 42b are formed of resin. A transparent resin is used for the outer housing 42b. A light source storage space 42S is formed by the coupling of the inner housing 42a and the outer housing 42b. With the indicator or flasher 42 being attached to the holding member 43, the inner housing 42a is located at a central portion of the storage space 43S, and the outer housing 42b is located in front of the inner housing 42a.

The printed circuit board 60, the plurality of light-emitting diodes 61, the driving circuit 62 and the lens cover member 63 are provided in the light source storage space 42S. The driving circuit 62 drives the plurality of light-emitting diodes 61.

The printed circuit board 60 is arranged to be substantially orthogonal to the front-and-rear direction L in the light source storage space 42S. As shown in Figure 13, the plurality of light-emitting diodes 61 and the driving circuit 62 are mounted on a surface, directed forward, of the printed circuit board 60. Further, the lens cover member 63 is provided to cover the printed circuit board 60, the plurality of light-emitting diodes 61 and the driving circuit 62 from the front. The lens cover member 63 is formed of a transparent resin.

The lens cover member 63 has a plurality of lens portions 63a that are opposite to the plurality of light-emitting diodes 61 in the front-and-rear direction L, respectively. Further, a plurality of (three in the present example) projections PP are formed at portions of the lens cover member 63 other than the plurality of lens portions 63a, that are opposite to the printed circuit board 60. Each projection PP is formed to extend from the inner surface of the lens cover member 63 towards the printed circuit board 60.

A screw hole is formed at the tip end of each projection PP. Further, a plurality of through holes corresponding to the plurality of projections PP of the lens cover member 63 are formed at the printed circuit board 60. Screws are attached to the tip ends of the plurality of projections PP of the lens cover member 63 through the plurality of through holes of the printed circuit board 60. Thus, the printed circuit board 60 is supported in the lens cover member 63.

In this case, it is not necessary to provide a member for supporting the printed circuit board 60 in a space 42G formed between the printed circuit board 60 and the inner housing 42a. Thus, the distance between the printed circuit board 60 and the inner housing 42a in the front-and-rear direction L can be shortened. Therefore, the size of the indicator or flasher 42 in the front-and-rear direction L can be reduced.

Each lens portion 63a of the lens cover member 63 applies predetermined light distribution characteristics to the light generated by the opposite light-emitting diode 61. It is necessary to maintain the distance between each lens portion 63a and each light-emitting diode 61 at an appropriate length LL in order to apply desired light distribution characteristics to the light generated by each light-emitting diode 61.

In the present example, a measurement of the plurality of projections PP of the lens cover member 63 (the length in the front-and-rear direction L) is determined such that the distance between each lens portion 63a and each light-emitting diode 61 is maintained at the length LL. In this case, the printed circuit board 60 is attached to the lens cover member 63, so that the distance between each lens portion 63a and each light-emitting diode 61 can be fixed at the appropriate length LL. Thus, the light generated by each light-emitting diode 61 is emitted towards a position in front of the motorcycle 100 through the lens portion 63a and the outer housing 42b.

Light shielding films co are formed of a black paint on other portions 63b, except for the plurality of lens portions 63a, of the lens cover member 63. Thus, when the indicator or flasher 42 is viewed from the front, the printed circuit board 60 is not visible through the outer housing 42b and the lens cover member 63. Therefore, design of the flasher 42 is good. Further, the light shielding films co can be easily formed of a black paint. Thus, an increase in cost of the mirror device 40 due to the screening of the printed circuit board 60 is inhibited.

The light shielding films co do not necessarily have to be formed on the lens cover member 63. In a case in which the light shielding films co are not formed, when the indicator or flasher 42 is viewed from the front, the printed circuit board 60 is visible through the plurality of lens portions 63a and the other portions 63b. Even in such a case, screw heads sh of a plurality of screws for attaching the printed circuit board 60 to the lens cover member 63 are not located in front of the printed circuit board 60. Therefore, the plurality of screw heads sh are prevented from being visible, so that the design of the flasher 42 is good.

As shown in Figure 12, the outer housing 42b of the flasher 42 has a front surface fs inclined rearward and downward. In the mirror device 40 of the present example, a front end upper portion 43x of the holding member 43 that forms the flasher opening 43a projects to a position further forward than the upper end of the front surface fs of the outer housing 42b.

In this case, during the travelling of the motorcycle 100, the air that flows towards the holding member 43 and the flasher 42 from the front smoothly flows from the front end upper portion 43x of the holding member 43 to the entire front surface fs of the outer housing 42b. Thus, aerodynamic characteristics of the front portion of the mirror device 40 are improved.

The right mirror device 40 has the same configuration as the above-mentioned left mirror device 40. Therefore, further explanation regarding the flasher 42 provided at the right mirror device 40 will not be given.

### (5) Configuration of Connection Portion between Mirror Device and Stay, and its Periphery

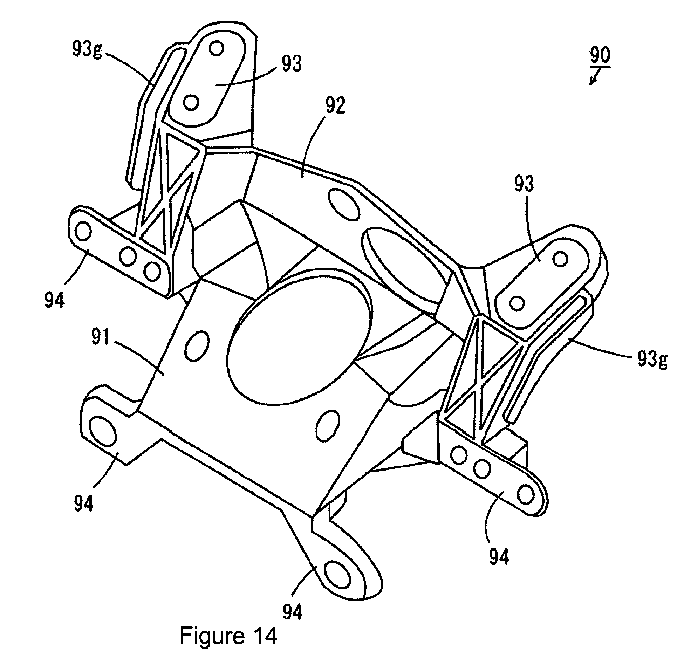

Figure 14 is an external perspective view of the stay 90 of Figure 3 as obliquely viewed rearward from a position further forward and upward than the vehicle. The stay 90 has a pair of wiring guides 93g, namely right and left wiring guides 93g, in addition to the duct attachment portion 91, the upstanding portion 92, the pair of device fixing portions 93 and the plurality of lamp fixing portion 94, described above.

The wiring guides 93g are formed to extend obliquely downward, outside of the pair of mirror device fixing portions 93. Grooves, which extend obliquely downward from positions at the height of the mirror device fixing portions 93, are formed in the wiring guides 93g, respectively.

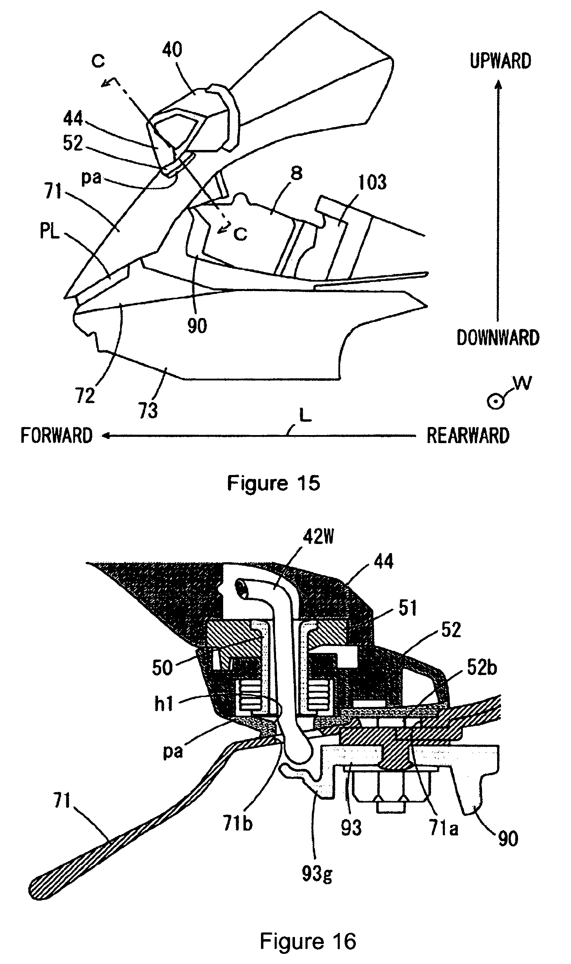

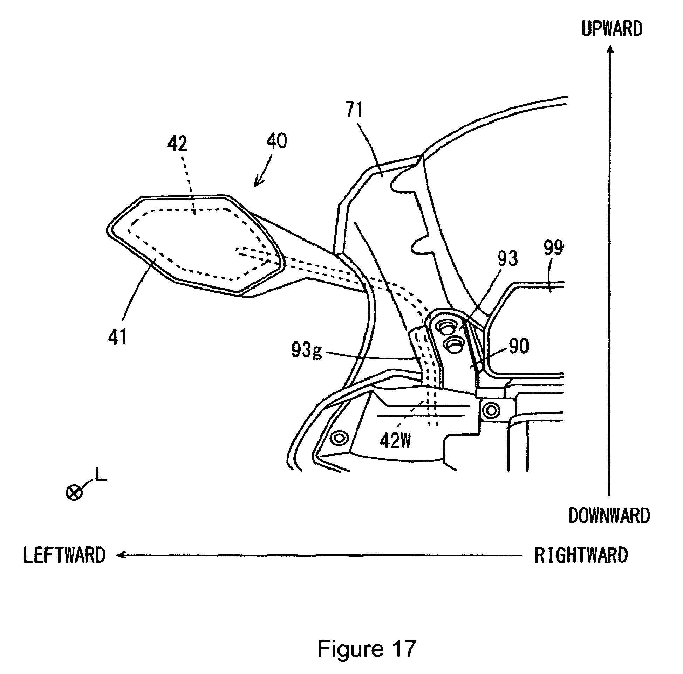

Figure 15 is a side view of part of the front portion of the motorcycle 100 as viewed from a position further leftward than the vehicle, Figure 16 is a cross sectional view taken along the line C-C of Figure 15, and Figure 17 is a back view of the part of the front portion of the motorcycle 100 as viewed from behind.

As described using Figure 6, at the time of the attaching of the mirror devices 40 to the pair of mirror device fixing portions 93 of the stay 90, the wirings 42W of the respective indicators or flashers 42 are passed through the respective wiring holes 71 b of the front cowl 71.

At this time, a respective portion of each of the wirings 42W that is passed from the respective wiring hole 71 b to a position behind the front cowl 71 is covered by the wiring guide 93g of the stay 90 from behind as shown in Figures 16 and 17. In this case, the portion of the wiring 42W that is passed through the wiring hole 71 b is passed through the groove of the wiring guide 93g of the stay 90 behind the front cowl 71, and guided downward of the stay 90. Therefore, partial deflection and bending of the wiring 42W are prevented. Further, because the wiring 42W of the flasher 42 is not visible from a position behind the head pipe 103, design of the front portion of the motorcycle 100 as viewed from the rider is good.

The front cowl 71 has a shape that is curved in the top-and-bottom direction H and the width direction W in order to improve the aerodynamic characteristics of the front portion of the motorcycle 100. Therefore, when the body fixing member 52 of the mirror device 40 is fixed to the mirror device fixing portion 93 of the stay 90, a gap is likely to be generated between the front cowl 71 and the body fixing member 52.

In the present example, as described above, the pair of mirror devices 40 is attached to the pair of mirror device fixing portions 93 of the stay 90 with the packing members pa made of rubber sandwiched therebetween, respectively. Thus, a gap between each body fixing member 52 and the front cowl 71 is closed by the packing member pa as shown in Figures 15 and 16.

Thus, the wiring 42W of the flasher 42 is prevented from being exposed in the gap between the body fixing member 52 and the front cowl 71. Therefore, the design of the front portion of the motorcycle 100 having the front cowl 71 is good.

Further, moisture such as rain water or mud water is prevented from entering the mirror fixing hole 71 a and the wiring hole 71 b of the front cowl 71 through the gap between the body fixing member 52 and the front cowl 71.

Further, the above-mentioned configuration is such that the wiring 42W of the flasher 42 is not exposed to the outside of the motorcycle 100 in the connection portion between the mirror device 40 and the stay 90, and its periphery. Therefore, vandalism such as a case in which the wiring 42W is cut can be prevented.

### (6) Effects

As described above, in the mirror device 40 according to the present embodiment, the one end 44a of the support member 44 is coupled to the holding member 43 that holds the mirror 41 and the flasher 42. Further, the other end 44b of the support member 44 is rotatably attached to the vehicle main body 200 by the movable holding mechanism 45. Thus, the mirror 41 and the flasher 42 are supported to be rotatable with respect to the vehicle main body 200 by the support member 44.

Since the support member 44 is integrally formed to have the inner passage 44p that extends from the one end 44a to the other end 44b, high rigidity for supporting the mirror 41 and the flasher 42 can be achieved at the support member 44. Further, because the support member 44 is formed of a single member, an increase in number of components is inhibited. Further, because the support member 44 does not have boundaries formed by the joining of a plurality of members with one another, rain water or mud water is prevented from entering the inner passage 44p through which the wiring 42W passes. Therefore, waterproofness of the support member 44 is ensured.

In the movable holding mechanism 45, with the flange 50f of the rivet pin 50 being located between the other end 44b of the support member 44 and the pin fixing member 51, the pin fixing member 51 is assembled into the other end 44b of the support member 44. Further, with the body fixing member 52 being arranged to surround the outer periphery of the rivet pin 50 between the pin fixing member 51 and the lower end of the rivet pin 50, the lower end of the rivet pin 50 is crimped.

Thus, it is possible to rotatably assemble the body fixing member 52 into the other end 44b of the support member 44 without forming an attachment hole for a fastening member such as a bolt at the other end 44b of the support member 44 or its periphery. Therefore, a cap for closing the attachment hole is not necessary, so that an increase in number of components is inhibited. Further, it is easy to assemble.

Further, because the wiring 42W of the flasher 42 is led to the vehicle main body 200 from the other end 44b of the support member 44 through the through passage 50a of the rivet pin 50, the wiring 42W is not pulled when the support member 44 is rotated. Therefore, the wiring 42W is prevented from being damaged.

Further, in the present embodiment, the support member 44 is formed of metal. Therefore, high rigidity for supporting the mirror 41 and the flasher 42 can be acquired at the support member 44. Further, the holding member 43 is formed of resin, so that an increase in weight of the member supported by the support member 44 is inhibited. As a result, a state of the mirror 41 and the flasher 42 being supported by the support member 44 is stabilized.

### (7) Other Embodiments

(7-1) While the duct 8 that leads air to the air cleaner 112 is attached to the intake guide 110 in the above-mentioned embodiment, the invention is not limited to this. When it is not necessary to acquire a supercharging effect, the duct 8 does not have to be provided. In this case, it is necessary that the stay 90 is configured to be attachable to the head pipe 103 and the body frame 1X.

(7-2) While the duct 8 is provided to pass through the center of the motorcycle 100 in the width direction W and extend forward from the front end of the intake guide 110 of the body frame 1X in the above-mentioned embodiment, the invention is not limited to this. The duct 8 may be provided to extend to a position further outward than the pair of main frames 1 in the width direction W from the air cleaner 112 and further extend forward outside of the front fork FF from the position further outward than the pair of main frames 1.

(7-3) While the light-emitting diodes 61 are used as the light source of the indicator or flasher 42 in the above-mentioned embodiment, the invention is not limited to this. An electric light that includes a bulb may be used as the light source of the indicator or flasher 42 instead of the light-emitting diodes 61.

(7-4) While the lens cover member 63 is provided to cover the printed circuit board 60, the plurality of light-emitting diodes 61 and the driving circuit 62 from the front in the storage space 43S of the indicator or flasher 42 in the above-mentioned embodiment, the invention is not limited to this. The lens cover member 63 does not necessarily have to be provided in the storage space 43S.

In this case, the plurality of lens portions are formed at portions of the outer housing 42b that are opposite to the plurality of light-emitting diodes 61. Further, the above-mentioned light shielding films co are formed on other portions, except for the plurality of lens portions, of the outer housing 42b. Thus, the configuration of the mirror device 40 can be simplified, and the number of components of the mirror device 40 can be reduced.

(7-5) While the body cover 7 includes the pair of right and left side cowls 73 in the above-mentioned embodiment, the invention is not limited to this. The body cover 7 does not have to include the pair of right and left side cowls 73. In this case, the number of components of the motorcycle 100 can be reduced.

(7-6) While the left and right handles 30 that are spaced apart from each other are attached to the front fork FF in the above-mentioned embodiment, the invention is not limited to this. The pair of handles 30 may be integrally formed of one tubular member, for example.

(7-7) While the support member 44 is formed of metal in the above-mentioned embodiment, the invention is not limited to this. The support member 44 may be formed of resin instead of metal. In this case, the weight of the support member 44 can be reduced.

(7-8) While the holding member 43 is formed of resin in the above-mentioned embodiment, the invention is not limited to this. The holding member 43 may be formed of metal instead of resin. In this case, high rigidity for supporting the mirror 41 and the flasher 42 can be acquired. Thus, the state of the mirror 41 and the flasher 42 being supported is more sufficiently stabilized.

(7-9) While the light shielding films co are formed of a black paint on the portions 63b of the lens cover member 63 other than the plurality of lens portions 62a in the above-mentioned embodiment of Figures 12 and 13, the invention is not limited to this. The light shielding films co may be formed of paint in a color other than black. The light shielding films co may be formed of a silver paint or a white paint, for example.

Further, the light shielding films co do not necessarily have to be formed of paint. The light shielding films co may be formed of a sheet-like member having light blocking properties, for example, instead of paint. A metal foil, a resin film, or the like can be used as the sheet-like member.

(7-10) While the above-mentioned embodiment is an example in which the present invention is applied to the motorcycle, the invention is not limited to this. The present invention may be applied to another saddle-ride or straddle-type vehicle, e.g. saddle-straddling type motor vehicle, such as a motor tricycle, moped, scooter, snow-mobile or an ATV.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 103 is an example of a head pipe, the front cowl 71 is an example of a front cowl, the vehicle main body 200 is an example of a vehicle main body, the mirror device 40 is an example of a mirror device, the wiring 42W is an example of wiring, the indicator or flasher 42 is an example of a turn indicator lamp and the mirror 41 is an example of a mirror.

Further, the holding member 43 is an example of a holding member, the one end 44a of the support member 44 is an example of a first end, the other end 44b of the support member 44 is an example of a second end, the support member 44 is an example of a support member, the movable holding mechanism 45 is an example of a holding mechanism, the inner passage 44p of the support member 44 is an example of an inner passage and the upper end of the rivet pin 50 is an example of a third end.

Further, the lower end of the rivet pin 50 is an example of a fourth end, the through passage 50a of the rivet pin 50 is an example of a through passage, the flange 50f is an example of a flange, the rivet pin 50 is an example of a mounting member.

Further, the pin insertion hole 51a of the pin fixing member 51 is an example of a first hole, the pin fixing member 51 is an example of a first fixing member, the pin insertion hole 52a of the body fixing member 52 is an example of a second hole, the body fixing member 52 is an example of a second fixing member and the mirror device 40 is an example of a mirror device.

Further, the printed circuit board 60 is an example of a printed circuit board, the light-emitting diode 61 is an example of a light source, the lens cover member 63 is an example of a cover member, the lens portion 63a of the lens cover member 63 is an example of a lens portion, the light shielding film co is an example of a light shield and the plurality of projections PP are examples of a projection.

Further, the motorcycle 100 is an example of a saddle-ride or straddle-type vehicle, such as a saddle-straddling type motor vehicle, the stay 90 is an example of an attachment member, the pair of mirror device fixing portions 93 of the stay 90 is an example of a portion to be fixed, the pair of wiring guides 93g of the stay 90 is an example of a guide, the pair of mirror fixing hole 71 a of the front cowl 71 is an example of a hole and the packing member pa is an example of an elastic waterproof member.

As each of constituent elements recited in the claims, various other elements having configurations or functions described in the claims can be also used.

The present invention can be effectively utilized for a vehicle having a turn indicator lamp and a mirror, and the like.

It will be appreciated that the embodiment of the invention hereinbefore described is given by way of example only, and is not meant to be limiting of the scope of the invention.

It will be appreciated that the term straddle-type vehicle or motor vehicle used herein, and as used in the art, is meant to include the following terms also used in the art:
saddle-ride type vehicle or motor vehicle, saddle-straddling type vehicle or motor vehicle, and includes: motorcycles and motorbikes as well as motor tricycles and All-Terrain Vehicles (ATVs), scooters, mopeds and snow mobiles.

## Claims

1. A mirror device (40) to be attached to a vehicle main body (200) that includes a head pipe (103) and a front cowl (71) provided in front of the head pipe (103), the mirror device (40) comprising:
a turn indicator lamp (42) having wiring (42W):
a rear-view mirror (41):
a holding member (43) that integrally holds the turn indicator lamp (42) and the rear-view mirror (41);
a support member (44) having a first end (44a) coupled to the holding member (43), and a second end (44b); and
a holding mechanism (45) for rotatably holding the second end (44b) of the support member (44) at the vehicle main body (200), wherein
the support member (44) is integrally formed to have an inner passage (44p) that extends from the first end (44a) to the second end (44b),
the holding mechanism (45) includes
a mounting member (50) that has a third end, a fourth end, a through passage (50a) extending from the third end to the fourth end of the mounting member (50), and a flange (50f) at the third end,
a first fixing member (51) that has a first hole (51a) into which the mounting member (50) is inserted, and
a second fixing member (52) that has a second hole (52a) into which the mounting member (50) is inserted, the second fixing member (52) being fixable to the front cowl (71),
the flange (50f) of the mounting member (50) is arranged between the second end (44b) of the support member (44) and the first fixing member (51) such that the inner passage (44p) of the support member (44) and the through passage (50a) of the mounting member (50) communicate with each other,
the first fixing member (51) extends or is assembled into the second end (44b) of the support member (44) with the flange (50f) of the mounting member (50) being located between the second end (44b) of the support member (44) and the first fixing member (51),
the fourth end of the mounting member (50) is crimped or otherwise arranged such that the first fixing member (51) and the second fixing member (52) are rotatable relative to each other about an axis of the mounting member (50) with the second fixing member (52) being located between the first fixing member (51) and the fourth end of the mounting member (50), and
the wiring (42w) of the turn indicator lamp (42) extending or leading to the fourth end of the mounting member (50) through an inside of the inner passage (44p) of the support member (44) and an inside of the through passage (50a) of the mounting member (50) from the first end (44a) of the support member (44).

2. The mirror device (40) according to claim 1, wherein
the support member (44) is formed of metal, and the holding member (43) is formed of resin.

3. The mirror device (40) according to claim 1 or 2, wherein
the turn indicator lamp (42) includes:
a printed circuit board (60),
a light source (61) mounted on or coupled to the printed circuit board (60), and
a cover member (63) provided to cover the printed circuit board (60) and the light source (61), wherein
the cover member (63) has a lens portion (63a) that applies predetermined light distribution characteristics to light generated by the light source (61), and a light shielding film (co) is formed on another portion of the cover member (63) other than the lens portion (63).

4. The mirror device (40) according to claim 3, wherein
the light shielding film (co) is formed of paint.

5. The mirror device (40) according to claim 3 or 4, wherein
a projection (PP) that extends towards the printed circuit board (60) is formed at a portion opposite to the printed circuit board (60) of the cover member (63), and
the printed circuit board (60) is supported at the cover member (63) by being attached to the projection (PP).

6. The mirror device (40) according to claim 5, wherein a screw hole is formed at the tip end of the projection (PP), a through hole corresponding to the projection (PP) of the cover member (63) is formed at the printed circuit board (60), a screw being attached to the tip end of the projection (PP) of the cover member (63) through the through hole of the printed circuit board (60) so as to support the printed circuit board (60) on the cover member (63).

7. The mirror device (40) according to claim 6, wherein a screw head (sh) of the screw for attaching the printed circuit board (60) to the cover member (63) is not located in front of the printed circuit board (60),

8. The mirror device (40) according to any preceding claim, wherein an outer housing (42b) of the turn indicator lamp (42) has a front surface (fs) inclined rearward and downward and a front end upper portion (43x) of the holding member (43) that forms an indicator or flasher opening (43a) projects to a position further forward than an upper end of the front surface (fs) of the outer housing (42b).

9. The mirror device (40) according to any preceding claim, wherein the mounting member (50) is or comprises a rivet member.

10. A saddle-ride or straddle-type vehicle (100), such as a saddle-straddling type motor vehicle, comprising:
a vehicle main body (200), and
a mirror device (40) according to any one of claims 1 to 9 provided on or at the vehicle main body (200).

11. The vehicle (100) according to claim 10, wherein
the vehicle main body (200) includes an attachment member (90) that supports the mirror device (40) at a position further forward than a head pipe (103) of the vehicle (100) in a side view of the vehicle (100),
the attachment member (90) including:
a fixing portion (93) to which the second fixing member (52) of the mirror device (40) is fixed, and
a guide (93g) that guides a portion of wiring (42W) drawn out from the fourth end of the mounting member (50) with the second fixing member (52) being fixed to the fixing portion (93), and
the guide (93g) is formed to cover the drawn out portion of the wiring (42W) from behind.

12. The vehicle (100) according to claim 10 or 11, wherein
the front cowl (71) has a hole (71 a),
the second fixing member (52) of the mirror device (40) is fixed to the vehicle main body (200) through the hole (71 a), and
an elastic waterproof member (pa) is arranged between the second fixing member (52) and the front cowl (71) such that a space surrounding the hole (71 a) of the front cowl is closed by surrounding the portion of the wiring (42W) drawn out from the fourth end of the mounting member (50) with the elastic waterproof member (pa) and a gap between the second fixing member (52) and the front cowl (71) is closed by the elastic waterproof member (pa).

13. A method of assembling a mirror device (40) for attaching to a vehicle main body (200), the vehicle main body (200) including a head pipe (103) and a front cowl (71) provided in front of the head pipe (103), the method comprising:
providing the mirror device (40) with a turn indicator lamp (42) having wiring (42W), a rear-view mirror (41), a holding member (43) that integrally holds the turn indicator lamp (42) and the rear-view mirror (41), a support member (44) having a first end (44a) coupled to the holding member (43), and a second end (44b) and a holding mechanism (45) for rotatably holding the second end (44b) of the support member (44) at the vehicle main body (200), the support member (44) being integrally formed to have an inner passage (44p) that extends from the first end (44a) to the second end (44b);
the holding mechanism (45) include a mounting member (50) that has a third end, a fourth end, a through passage (45a) extending from the third end to the fourth end, and a flange (45f) at the third end, the holding mechanism (45) including a first fixing member (51) that has a first hole (51 a) and a second fixing member (52) that has a second hole (52), the second fixing member (52) being fixable to the front cowl (71);
wherein the method comprises:
inserting the mounting member (50) into the first hole (51 a);
inserting the mounting member (50) into the second hole (52a);
arranging the flange of the mounting member (50) between the second end (44b) of the support member (44) and the first fixing member (51) such that the inner passage (44p) of the support member (44) and the through passage (5aa) of the mounting member (50) communicate with each other;
assembling or extending the first fixing member (51) into the second end (44b) of the support member (44);
locating the flange (50f) of the mounting member (50) between the second end (44b) of the support member (44) and the first fixing member (51);
crimping or otherwise arranging the fourth end of the mounting member (50) such that the first fixing member (51) and the second fixing member (52) are rotatable relative to each other about an axis of the mounting member (50);
locating the second fixing member (52) between the first fixing member (51) and the fourth end of the mounting member (50);
extending or leading the wiring (42W) of the turn indicator lamp (42) to the fourth end of the mounting member (50) through an inside of the inner passage (44p) and an inside of the through passage (50a) of the mounting member (50) from the first end (44a) of the support member (44).

14. The method of claim 13, wherein the mirror device (40) is a mirror device according to any of claims 1 to 9.

15. A method of attaching a mirror device (40) according to any of claims 1 to 9 to a vehicle main body (200) of a saddle-ride or straddle-type vehicle, such as a saddle-straddling type motor vehicle, the vehicle main body (200) comprising a head pipe (103) and a front cowl (71) provided in front of the head pipe (103), the method comprising:
fixing the second fixing member (52) of the mirror device (40) to the front cowl (71).

## Patentansprüche

1. Spiegelvorrichtung (40), die an einem Fahrzeug-Hauptaufbau (200) zu befestigen ist, der ein Kopfrohr (103) und eine vor dem Kopfrohr (103) bereitgestellte Frontverkleidung (71) einschließt, wobei die Spiegelvorrichtung (40) Folgendes umfasst:
eine Fahrtrichtungsanzeiger-Lampe (42), die eine Verdrahtung (42W) aufweist,
einen Rückblickspiegel (41),
ein Halteelement (43), das integral die Fahrtrichtungsanzeiger-Lampe (42) und den Rückblickspiegel (41) hält,
ein Stützelement (44), das ein an das Halteelement (43) gekoppeltes erstes Ende (44a) und ein zweites Ende (44b) aufweist, und
einen Haltemechanismus (45) zum drehbaren Halten des zweiten Endes (44b) des Stützelements (44) an dem Fahrzeug-Hauptaufbau (200), wobei
das Stützelement (44) integral so geformt ist, dass es einen inneren Durchgang (44p) aufweist, der sich von dem ersten Ende (44a) zu dem zweiten Ende (44b) erstreckt,
der Haltemechanismus (45) Folgendes einschließt:
ein Anbringungselement (50), das ein drittes Ende, ein viertes Ende, einen Durchgang (50a), der sich von dem dritten Ende zu dem vierten Ende des Anbringungselements (50) erstreckt, und einen Flansch (50f) an dem dritten Ende aufweist,
ein erstes Fixierungselement (51), das ein erstes Loch (51a) aufweist, in welches das Anbringungselement (50) eingesetzt wird, und
ein zweites Fixierungselement (52), das ein zweites Loch (52a) aufweist, in welches das Anbringungselement (50) eingesetzt wird, wobei das zweite Fixierungselement (52) an der Frontverkleidung (71) befestigt werden kann,
der Flansch (50f) des Anbringungselements (50) derart zwischen dem zweiten Ende (44b) des Stützelements (44) und dem ersten Fixierungselement (51) angeordnet ist, dass der innere Durchgang (44p) des Stützelements (44) und der Durchgang (50a) des Anbringungselements (50) miteinander in Verbindung stehen,
das erste Fixierungselement (51) sich in das zweite Ende (44b) des Stützelements (44) erstreckt oder in dasselbe eingebaut ist, wobei der Flansch (50f) des Anbringungselements (50) zwischen dem zweiten Ende (44b) des Stützelements (44) und dem ersten Fixierungselement (51) angeordnet ist,
das vierte Ende des Anbringungselements (50) gequetscht oder auf andere Weise derart angeordnet ist, dass das erste Fixierungselement (51) und das zweite Fixierungselement (52) im Verhältnis zueinander um eine Achse des Anbringungselements (50) drehbar sind, wobei das zweite Fixierungselement (52) zwischen dem ersten Fixierungselement (51) und dem vierten Ende des Anbringungselements (50) angeordnet ist, und
die Verdrahtung (42w) der Fahrtrichtungsanzeiger-Lampe (42) sich zu dem vierten Ende des Anbringungselements (50) erstreckt oder zu demselben führt, durch eine Innenseite des inneren Durchgangs (44p) des Stützelements (44) und eine Innenseite des Durchgangs (50a) des Anbringungselements (50) von dem ersten Ende (44a) des Stützelements (44).

2. Spiegelvorrichtung (40) nach Anspruch 1, wobei
das Stützelement (44) aus Metall geformt ist und das Halteelement (43) aus Harz geformt ist.

3. Spiegelvorrichtung (40) nach Anspruch 1 oder 2, wobei
die Fahrtrichtungsanzeiger-Lampe (42) Folgendes einschließt:
eine gedruckte Leiterplatte (60),
eine Lichtquelle (61), die auf der gedruckten Leiterplatte (60) montiert oder an dieselbe angeschlossen ist, und
ein Abdeckungselement (63), das bereitgestellt wird, um die gedruckte Leiterplatte (60) und die Lichtquelle (61) abzudecken, wobei
das Abdeckungselement (63) einen Linsenabschnitt (63a) aufweist, der vorbestimmte Lichtverteilungscharakteristika auf das durch die Lichtquelle (61) erzeugte Licht anwendet, und ein Lichtabschirmungsfilm (co) auf einem anderen Abschnitt des Abdeckungselements (63) als dem Linsenabschnitt (63a) geformt ist.

4. Spiegelvorrichtung (40) nach Anspruch 3, wobei
der Lichtabschirmungsfilm (co) aus Farbe gebildet ist.

5. Spiegelvorrichtung (40) nach Anspruch 3 oder 4, wobei
ein Vorsprung (PP), der sich zu der gedruckten Leiterplatte (60) hin erstreckt, an einem der gedruckten Leiterplatte (60) gegenüberliegenden Abschnitt des Abdeckungselements (63) geformt ist und
die gedruckte Leiterplatte (60) dadurch an dem Abdeckungselement (63) getragen wird, dass sie an dem Vorsprung (PP) befestigt ist.

6. Spiegelvorrichtung (40) nach Anspruch 5, wobei ein Schraubenloch an dem Spitzenende des Vorsprungs (PP) geformt ist, ein Durchgangsloch, das dem Vorsprung (PP) des Abdeckungselements (63) entspricht, an der gedruckten Leiterplatte (60) geformt ist, eine Schraube an dem Spitzenende des Vorsprungs (PP) des Abdeckungselements (63) durch das Durchgangsloch der gedruckten Leiterplatte (60) befestigt ist, um so die gedruckte Leiterplatte (60) auf dem Abdeckungselement (63) zu tragen.

7. Spiegelvorrichtung (40) nach Anspruch 6, wobei ein Schraubenkopf (SH) der Schraube zum Befestigen der gedruckten Leiterplatte (60) an dem Abdeckungselement (63) nicht vor der gedruckten Leiterplatte (60) angeordnet ist.

8. Spiegelvorrichtung (40) nach einem der vorhergehenden Ansprüche, wobei ein äußeres Gehäuse (42) der Fahrtrichtungsanzeiger-Lampe (42) eine nach hinten und nach unten geneigte vordere Fläche (fs) aufweist und ein oberer vorderer Endabschnitt (43x) des Haltelements (43), der eine Anzeiger- oder Blinkeröffnung (43a) bildet, bis zu einer Position, weiter nach vorn als ein oberes Ende der vorderen Fläche (fs) des äußeren Gehäuses (42), vorspringt.

9. Spiegelvorrichtung (40) nach einem der vorhergehenden Ansprüche, wobei das Anbringungselement (50) ein Nietelement ist oder umfasst.

10. Reitsitz- oder Spreizsitz-Fahrzeug (100), wie beispielsweise ein Sattelspreizsitz-Kraftfahrzeug, das Folgendes umfasst:
einen Fahrzeug-Hauptaufbau (200) und
eine Spiegelvorrichtung (40) nach einem der Ansprüche 1 bis 9, die auf oder an dem Fahrzeug-Hauptaufbau (200) bereitgestellt wird.

11. Fahrzeug (100) nach Anspruch 10, wobei
der Fahrzeug-Hauptaufbau (200) ein Befestigungselement (90) einschließt, das die Spiegelvorrichtung (40) an einer Position, weiter vorn als ein Kopfrohr (103) des Fahrzeugs (100) in einer Seitenansicht des Fahrzeugs (100) trägt,
das Befestigungselement (90) Folgendes einschließt:
einen Fixierungsabschnitt (93), an dem das zweite Fixierungselement (52) der Spiegelvorrichtung (40) fixiert ist, und
eine Führung (93g), die einen aus dem vierten Ende des Anbringungselements (50) herausgezogenen Abschnitt der Verdrahtung (42W) führt, wobei das zweite Fixierungselement (52) an dem Fixierungsabschnitt (93) fixiert ist, und
die Führung (93g) so geformt ist, dass sie den herausgezogenen Abschnitt der Verdrahtung (42W) von hinten abdeckt.

12. Fahrzeug (100) nach Anspruch 10 oder 11, wobei
die Frontverkleidung (71) ein Loch (71a) aufweist,
das zweite Fixierungselement (52) der Spiegelvorrichtung (40) durch das Loch (71a) an dem Fahrzeug-Hauptaufbau (200) befestigt ist und
ein elastisches wasserfestes Element (pa) derart zwischen dem zweiten Fixierungselement (52) und der Frontverkleidung (71) angeordnet ist, dass ein Raum, der das Loch (71a) der Frontverkleidung umgibt, durch das Umschließen des aus dem vierten Ende des Anbringungselements (50) herausgezogenen Abschnitts der Verdrahtung (42W) mit dem elastischen wasserfesten Element (pa) verschlossen wird und ein Spalt zwischen dem zweiten Fixierungselement (52) und der Frontverkleidung (71) durch das elastische wasserfeste Element (pa) verschlossen wird.

13. Verfahren zum Zusammenbauen einer Spiegelvorrichtung (40) zum Befestigen an einem Fahrzeug-Hauptaufbau (200), der ein Kopfrohr (103) und eine vor dem Kopfrohr (103) bereitgestellte Frontverkleidung (71) einschließt, wobei das Verfahren Folgendes umfasst:
das Versehen der Spiegelvorrichtung (40) mit einer Fahrtrichtungsanzeiger-Lampe (42), die eine Verdrahtung (42W) aufweist, einem Rückblickspiegel (41), einem Halteelement (43), das integral die Fahrtrichtungsanzeiger-Lampe (42) und den Rückblickspiegel (41) hält, einem Stützelement (44), das ein an das Halteelement (43) gekoppeltes erstes Ende (44a) und ein zweites Ende (44b) aufweist, einem Haltemechanismus (45) zum drehbaren Halten des zweiten Endes (44b) des Stützelements (44) an dem Fahrzeug-Hauptaufbau (200), wobei das Stützelement (44) integral so geformt ist, dass es einen inneren Durchgang (44p) aufweist, der sich von dem ersten Ende (44a) zu dem zweiten Ende (44b) erstreckt,
wobei der Haltemechanismus (45) ein Anbringungselement (50), das ein drittes Ende, ein viertes Ende, einen Durchgang (45a), der sich von dem dritten Ende zu dem vierten Ende erstreckt, und einen Flansch (45f) an dem dritten Ende aufweist, wobei der Haltemechanismus (45) ein erstes Fixierungselement (51), das ein erstes Loch (51a) aufweist, und ein zweites Fixierungselement (52), das ein zweites Loch (52) aufweist, umfasst, wobei das zweite Fixierungselement (52) an der Frontverkleidung (71) befestigt werden kann, wobei das Verfahren Folgendes umfasst:
das Einsetzen des Anbringungselements (50) in das erste Loch (51a),
das Einsetzen des Anbringungselements (50) in das zweite Loch (52a),
das Anordnen des Flanschs des Anbringungselements (50) derart zwischen dem zweiten Ende (44b) des Stützelements (44) und dem ersten Fixierungselement (51), dass der innere Durchgang (44p) des Stützelements (44) und der Durchgang (50a) des Anbringungselements (50) miteinander in Verbindung stehen,
das Einbauen oder Erstrecken des ersten Fixierungselements (51) in das zweite Ende (44b) des Stützelements (44),
das Positionieren des Flanschs (50f) des Anbringungselements (50) zwischen dem zweiten Ende (44b) des Stützelements (44) und dem ersten Fixierungselement (51),
das Quetschen oder auf andere Weise Anordnen des vierten Endes des Anbringungselements (50) derart, dass das erste Fixierungselement (51) und das zweite Fixierungselement (52) im Verhältnis zueinander um eine Achse des Anbringungselements (50) drehbar sind,
das Positionieren des zweiten Fixierungselements (52) zwischen dem ersten Fixierungselement (51) und dem vierten Ende des Anbringungselements (50),
das Erstrecken oder Führen der Verdrahtung (42w) der Fahrtrichtungsanzeiger-Lampe (42) zu dem vierten Ende des Anbringungselements (50) durch eine Innenseite des inneren Durchgangs (44p) und eine Innenseite des Durchgangs (50a) des Anbringungselements (50) von dem ersten Ende (44a) des Stützelements (44).

14. Verfahren nach Anspruch 13, wobei die Spiegelvorrichtung (40) eine Spiegelvorrichtung nach einem der Ansprüche 1 bis 9 ist.

15. Verfahren zum Befestigen einer Spiegelvorrichtung (40) nach einem der Ansprüche 1 bis 9 an einem Fahrzeug-Hauptaufbau (200) eines Reitsitz- oder Spreizsitz-Fahrzeugs, wie beispielsweise eines Sattelspreizsitz-Kraftfahrzeugs, wobei der Fahrzeug-Hauptaufbau (200) ein Kopfrohr (103) und eine vor dem Kopfrohr (103) bereitgestellte Frontverkleidung (71) umfasst, wobei das Verfahren Folgendes umfasst:
das Befestigen des zweiten Fixierungselements (52) der Spiegelvorrichtung (40) an der Frontverkleidung (71).

## Revendications

1. Dispositif de miroir (40) à accrocher à un corps principal de véhicule (200) qui comprend une colonne de direction (103) et un capot avant (71) fourni devant la colonne de direction (103), le dispositif de miroir (40) comprenant :
une lampe d'indicateur de changement de direction (42) présentant un câblage (42W) ;
un rétroviseur (41) ;
un élément de retenue (43) qui retient d'un seul tenant la lampe d'indicateur de changement de direction (42) et le rétroviseur (41) ;
un élément de support (44) présentant une première extrémité (44a) couplée à l'élément de retenue (43), et une deuxième extrémité (44b) ; et
un mécanisme de retenue (45) permettant de retenir rotative la deuxième extrémité (44b) de l'élément de support (44) au niveau du corps principal de véhicule (200), dans lequel
l'élément de support (44) est formé d'un seul tenant de manière à présenter un passage intérieur (44p) qui s'étend de la première extrémité (44a) vers la deuxième extrémité (44b),
le mécanisme de retenue (45) comprend
un élément de montage (50) qui présente une troisième extrémité, une quatrième extrémité, un passage traversant (50a) s'étendant de la troisième extrémité vers la quatrième extrémité de l'élément de montage (50), et une bride (50f) au niveau de la troisième extrémité,
un premier élément de fixation (51) qui présente un premier trou (51a) dans lequel est inséré l'élément de montage (50), et
un deuxième élément de fixation (52) qui présente un deuxième trou (52a) dans lequel est inséré l'élément de montage (50), le deuxième élément de fixation (52) pouvant être fixé au capot avant (71),
la bride (50f) de l'élément de montage (50) est agencée entre la deuxième extrémité (44b) de l'élément de support (44) et le premier élément de fixation (51) de telle manière que le passage intérieur (44p) de l'élément de support (44) et le passage traversant (50a) de l'élément de montage (50) communique l'un avec l'autre,
le premier élément de fixation (51) s'étend ou est assemblé dans la deuxième extrémité (44b) de l'élément de support (44), la bride (50f) de l'élément de montage (50) étant située entre la deuxième extrémité (44b) de l'élément de support (44) et le premier élément de fixation (51),
la quatrième extrémité de l'élément de montage (50) est pincée ou agencée d'une autre manière, de sorte que le premier élément de fixation (51) et le deuxième élément de fixation (52) sont rotatifs l'un par rapport à l'autre autour d'un axe de l'élément de montage (50), le deuxième élément de fixation (52) étant situé entre le premier élément de fixation (51) et la quatrième extrémité de l'élément de montage (50), et
le câblage (42w) de la lampe d'indicateur de changement de direction (42) s'étend ou conduit jusqu'à la quatrième extrémité de l'élément de montage (50)à travers un intérieur du passage intérieur (44p) de l'élément de support (44) et un intérieur du passage traversant (50a) de l'élément de montage (50) à partir de la première extrémité (44a) de l'élément de support (44).

2. Dispositif de miroir (40) selon la revendication 1, dans lequel
l'élément de support (44) est formé à partir de métal, et l'élément de retenue (43) est formé à partir de résine.

3. Dispositif de miroir (40) selon la revendication 1 ou 2, dans lequel
la lampe d'indicateur de changement de direction (42) comprend :
une carte de circuit imprimé (60),
une source lumineuse (61) montée sur ou couplée à la carte de circuit imprimé (60), et
un élément de couverture (63) fourni pour couvrir la carte de circuit imprimé (60) et la source lumineuse (61), dans lequel
l'élément de couverture (63) présente une partie lentille (63a) qui applique des caractéristiques de répartition de lumière prédéterminées à de la lumière générée par la source lumineuse (61), et un film écran (co) est formé sur une autre partie de l'élément de couverture (63) autre que la partie lentille (63a).

4. Dispositif de miroir (40) selon la revendication 3, dans lequel
le film écran (co) est formé à partir de peinture.

5. Dispositif de miroir (40) selon la revendication 3 ou 4, dans lequel
une saillie (PP) qui s'étend en direction de la carte de circuit imprimé (60) est formée au niveau d'une partie opposée à la carte de circuit imprimé (60) de l'élément de couverture (63), et
la carte de circuit imprimé (60) est supportée au niveau de l'élément de couverture (63) en étant fixée à la saillie (PP).

6. Dispositif de miroir (40) selon la revendication 5, dans lequel un trou de vis est formé au niveau de l'extrémité côté pointe de la saillie (PP), un trou traversant correspondant à la saillie (PP) de l'élément de couverture (63) est formé au niveau de la carte de circuit imprimé (60), une vis étant fixée à l'extrémité côté pointe de la saillie (PP) de l'élément de couverture (63) à travers le trou traversant de la carte de circuit imprimé (60) de manière à supporter la carte de circuit imprimé (60) sur l'élément de couverture (63).

7. Dispositif de miroir (40) selon la revendication 6, dans lequel une tête de vis (sh) de la vis permettant d'accrocher la carte de circuit imprimé (60) à l'élément de couverture (63) n'est pas située devant la carte de circuit imprimé (60).

8. Dispositif de miroir (40) selon l'une quelconque des revendications précédentes, dans lequel une enveloppe extérieure (42b) de la lampe d'indicateur de changement de direction (42) présente une surface avant (fs) inclinée vers l'arrière et vers le bas et une partie supérieure d'extrémité avant (43x) de l'élément de retenue (43), qui forme une ouverture d'indicateur ou de clignotant (43a), fait saillie jusqu'à une position plus en avant qu'une extrémité supérieure de la surface avant (fs) de l'enveloppe extérieure (42b).

9. Dispositif de miroir (40) selon l'une quelconque des revendications précédentes, dans lequel l'élément de montage (50) est ou comprend un élément formant rivet.

10. Véhicule de type à selle ou à enfourcher (100), comme un véhicule à moteur de type à selle ou à enfourcher, comprenant :
un corps principal de véhicule (200), et
un dispositif de miroir (40) selon l'une quelconque des revendications 1 à 9, fourni sur ou au niveau du corps principal de véhicule (200).

11. Véhicule (100) selon la revendication 10, dans lequel
le corps principal de véhicule (200) comprend un élément d'accrochage (90) qui supporte le dispositif de miroir (40) au niveau d'une position plus en avant qu'une colonne de direction (103) du véhicule (100) en vue latérale du véhicule (100),
l'élément d'accrochage (90) comprenant :
une partie fixation (93) à laquelle est fixé le deuxième élément de fixation (52) du dispositif de miroir (40), et
un guide (93g) qui guide une partie du câblage (42W) tirée à partir de la quatrième extrémité de l'élément de montage (50), le deuxième élément de fixation (52) étant fixé à la partie fixation (93), et
le guide (93g) est formé de manière à couvrir la partie tirée du câblage (42W) par l'arrière.

12. Véhicule (100) selon la revendication 10 ou 11, dans lequel
le capot avant (71) présente un trou (71a),
le deuxième élément de fixation (52) du dispositif de miroir (40) est fixé au corps principal de véhicule (200) à travers le trou (71a), et
un élément étanche élastique (pa) est agencé entre le deuxième élément de fixation (52) et le capot avant (71) de sorte qu'un espace entourant le trou (71a) du capot avant est fermé en entourant la partie du câblage (42W) tirée à partir de la quatrième extrémité de l'élément de montage (50) avec l'élément étanche élastique (pa), et un espace entre le deuxième élément de fixation (52) et le capot avant (71) est fermé grâce à l'élément étanche élastique (pa).

13. Procédé d'assemblage d'un dispositif de miroir (40) permettant un accrochage à un corps principal de véhicule (200), le corps principal de véhicule (200) comprenant une colonne de direction (103) et un capot avant (71) fourni devant la colonne de direction (103), le procédé comprenant une étape consistant à :
fournir le dispositif de miroir (40) avec une lampe d'indicateur de changement de direction (42) présentant un câblage (42W), un rétroviseur (41), un élément de retenue (43) qui retient d'un seul tenant la lampe d'indicateur de changement de direction (42) et le rétroviseur (41), un élément de support (44) présentant une première extrémité (44a) couplée à l'élément de retenue (43), et une deuxième extrémité (44b) et un mécanisme de retenue (45) permettant de retenir rotative la deuxième extrémité (44b) de l'élément de support (44) au niveau du corps principal de véhicule (200), l'élément de support (44) étant formé d'un seul tenant de manière à présenter un passage intérieur (44p) qui s'étend de la première extrémité (44a) vers la deuxième extrémité (44b) ;
le mécanisme de retenue (45) comprend un élément de montage (50) qui présente une troisième extrémité, une quatrième extrémité, un passage traversant (45a) s'étendant de la troisième extrémité vers la quatrième extrémité, et une bride (45f) au niveau de la troisième extrémité, le mécanisme de retenue (45) comprenant un premier élément de fixation (51) qui présente un premier trou (51a) et un deuxième élément de fixation (52) qui présente un deuxième trou (52), le deuxième élément de fixation (52) pouvant être fixé sur le capot avant (71) ; dans lequel le procédé comprend les étapes consistant à :
insérer l'élément de montage (50) dans le premier trou (51a) ;
insérer l'élément de montage (50) dans le deuxième trou (52a) ;
agencer la bride de l'élément de montage (50) entre la deuxième extrémité (44b) de l'élément de support (44) et le premier élément de fixation (51) de sorte que le passage intérieur (44p) de l'élément de support (44) et le passage traversant (50a) de l'élément de montage (50) communiquent l'un avec l'autre ;
assembler ou étendre le premier élément de fixation (51) jusque dans la deuxième extrémité (44b) de l'élément de support (44) ;
placer la bride (50f) de l'élément de montage (50) entre la deuxième extrémité (44b) de l'élément de support (44) et le premier élément de fixation (51) ;
pincer ou agencer d'une autre manière la quatrième extrémité de l'élément de montage (50) de sorte que le premier élément de fixation (51) et le deuxième élément de fixation (52) sont rotatifs l'un par rapport à l'autre autour d'un axe de l'élément de montage (50) ;
placer le deuxième élément de fixation (52) entre le premier élément de fixation (51) et la quatrième extrémité de l'élément de montage (50) ;
étendre ou guider le câblage (42W) de la lampe d'indicateur de changement de direction (42) jusqu'à la quatrième extrémité de l'élément de montage (50) à travers un intérieur du passage intérieur (44p) et un intérieur du passage traversant (50a) de l'élément de montage (50) à partir de la première extrémité (44a) de l'élément de support (44).

14. Procédé selon la revendication 13, dans lequel le dispositif de miroir (40) est un dispositif de miroir selon l'une quelconque des revendications 1 à 9.

15. Procédé d'accrochage d'un dispositif de miroir (40) selon l'une quelconque des revendications 1 à 9 sur un corps principal de véhicule (200) d'un véhicule de type à selle ou à enfourcher, comme un véhicule à moteur de type à selle ou à enfourcher, le corps principal de véhicule (200) comprenant une colonne de direction (103) et un capot avant (71) fourni devant la colonne de direction (103), le procédé comprenant une étape consistant à :
fixer le deuxième élément de fixation (52) du dispositif de miroir (40) sur le capot avant (71).
